(19) Europäisches Patentamt
European Patent Office
Office européen des brevets

(11) EP 0 918 233 A2

(12) EUROPEAN PATENT APPLICATION

(43) Date of publication:
26.05.1999 Bulletin 1999/21

(51) Int. Cl.$^6$: G02B 1/04

(21) Application number: 98309546.4

(22) Date of filing: 23.11.1998

(84) Designated Contracting States:
AT BE CH CY DE DK ES FI FR GB GR IE IT LI LU MC NL PT SE
Designated Extension States:
AL LT LV MK RO SI

(30) Priority: 24.11.1997 US 976706

(71) Applicant:
JOHNSON & JOHNSON VISION PRODUCTS, INC.
Jacksonville, Florida 32216-0995 (US)

(72) Inventors:
- Molock, Frank F.
Orange Park, FL 32073 (US)
- Ford, James D.
Orange Park, FL 32073 (US)
- Nunez, Ivan M.
Roanoke, VA 24018 (US)
- Elliott, Laura D.
Austin, TX 48704 (US)

(74) Representative:
Mercer, Christopher Paul
Carpmaels & Ransford
43, Bloomsbury Square
London WC1A 2RA (GB)

# (54) Polymeric ophthalmic lens with crosslinker containing saccharide residue

(57) An ophthalmic lens, particularly a soft hydrogel contact lens, is disclosed. The lens can be derived from a crosslinked polymer made by reacting a hydrophilic monomer with a crosslinking amount of a polyfunctional compound.

EP 0 918 233 A2

## Description

## BACKGROUND OF THE INVENTION

This invention relates to a crosslinked polymer derived from the polymerization of a hydrophilic monomer and a crosslinking agent. More specifically, it relates to such a polymer which has the properties desired for ophthalmic lenses, particularly soft hydrogel contact lenses.

Soft hydrogel contact lenses are currently the lens design of choice for extended wear applications. These lenses are derived from the polymerization of a hydrophilic monomer such as hydroxyethyl methacrylate (HEMA). Other hydrophilic monomers can be used, such as N,N-dimethylacrylamide (DMA) and N-vinyl pyrrolidone (NVP), although these alternative monomers have not yet found as wide-spread an acceptance as HEMA for the fabrication of commercially viable contact lenses for daily or extended wear applications.

A contact lens composed of the polymerization reaction product of HEMA (polyHEMA) is swollen in water to prepare a hydrogel. For higher water-containing hydrogels, the water content of the hydrogel lens is an important factor in patient comfort, because the permeability of oxygen through the lens is dependent on its water content. Since the corneal tissue of the eye of a contact lens wearer needs oxygen to "breathe", the water content of the lens, and hence its oxygen permeability, are important factors in achieving an acceptable degree of wearer comfort and corneal health.

Although polyHEMA lenses can be swollen with water to prepare hydrogels with minimally acceptable water contents and oxygen permeability, such lenses composed of polyHEMA alone do not exhibit sufficient mechanical properties for routine handling and care. Accordingly, commercially available contact lenses are derived from polymerizing not only HEMA, also a crosslinking monomer to enhance the mechanical properties of the finished lens. The crosslinking monomer conventionally used is ethylene glycol dimethacrylate (EGDMA). While the crosslinking monomer improves the mechanical properties of the finished lens, and therefore enhances the handleability of the lens, it also has adverse consequences. High levels of conventional crosslinking agents serve to reduce the water content of the finished lens and increase its brittleness. The reduced water content lowers the permeability of oxygen through the lens, which in turn decreases patient comfort and corneal health over an extended period of wear. The increase in brittleness of the lens makes the lens more fragile, and therefore more susceptible to tearing.

Since neither polyHEMA alone nor the reaction product of HEMA with a crosslinking agent has produced optimum properties for a soft contact lens, commercially available lenses typically incorporate additional monomeric components from which the lens is derived. For example, anionic monomers such as methacrylic acid (MAA) are frequently added to further increase the water content of the lens; and hydrophobic monomers, such as alkyl acrylates or methacrylates, are added to further enhance the mechanical properties of the finished lens. Unfortunately, there is still plenty of room to improve the deed properties for ophthalmic lenses, particularly soft hydrogel contact lenses, and so therefore numerous attempts have been made to develop such lenses from novel polymer systems.

Numerous examples abound in the literature of attempts to fabricate hydrogel contact lenses from unique polymer systems. What follows is a discussion of some of the more relevant teachings with respect to these alternative polymers for use in fabricating ophthalmic lenses.

U.S. Patent 3,988,274 describes soft contact lenses made from a number of monomeric components designed to optimize oxygen permeability and strength. The predominant monomer is an alkylene glycol monomethacrylate such as HEMA or a monomethacrylate of polyethylene glycol (monoester of PEG). The crosslinking monomer is a conventional polyfunctional monomer such as EGDMA, or a higher molecular weight crosslinker such as polyethylene glycol dimethacrylate. Acrylic or methacrylic acid is added to increase water content, and an alkyl ester of acrylic or methacrylic acid, such as N-hexyl methacrylate, is added to improve strength.

U.S. Patent 5,034,461 describes contact lenses made from copolymers of conventional ethylenically reactive monomers such as HEMA, or fluorinated analogs of these monomers, and a prepolymer. The prepolymer is prepared sequentially by first reacting an isocyanate-terminated polyol with a polyalkylene glycol, and then capping this reaction product with HEMA.

U.S. Patent 4,780,488 describes preparing a contact lens material from a crossed polymer of a polyfunctional monomer. In one embodiment, the polyfunctional monomer is made by first capping a polyalkylene glycol, e.g. polypropylene glycol (PPG), with a diisocyanate, and then functionalizing the capped polyol with ethylenic unsaturation by reacting it with HEMA. Dimensional stability may be improved by adding a conventional crosslinking agent.

European Patent Application 321,403 describes contact lenses made from crosslinked polyvinyl alcohol (PVA). In one embodiment, a PVA derivative is prepared by reacting PVA with glycidyl methacrylate (GMA). The PVA/GMA can be copolymerized with a vinylic monomer composition containing a predominant amount of a hydrophobic monomer and a minor amount of a hydrophilic monomer.

U.S. Patent 4,921,956 describes preparing a reactive modifier which can be used to increase the water content of a soft contact lens made from hydrophilic polymers. The modifier, in one embodiment, contains a cyanate functionality which can be reacted with the hydrophilic monomer which is polymerized to form the lens.

More recently, an attempt has been made to develop a contact lens from a polymer containing a glucose or sucrose derivative. U.S. Patent No. 5,196,458 discloses preparing a contact lens from a polymer containing such a glucose or sucrose derivative. A prepolymer is formed by reacting an alkoxylated glucose or sucrose with a capped, free radical reactive isocyanate e.g. an ultraviolet light curable (UV-curable) isocyanate. The free radical reactive isocyanate is capped by first reacting it with a polyalkylether, such as PEG or PPG, and then reacting this intermediate with a diisocyanate. In a related disclosure, European Patent Application 394,496, published October 31, 1990, teaches saccharide derivatives which can be polymerized to form a polymer for biomedical applications. In one, embodiment, the saccharine derivative is a glycoside derivative prepared by reacting an alkyl glycoside, such as methyl glycoside, with an ester of acrylic or methacrylic acid, such as HEMA.

Another attempt to fabricate ophthalmic lenses, especially soft hydrogel contact lenses, from alternative polymeric systems is described in European Patent Application 493, 320 published December 20, 1990. This publication teaches mating lenses from the following reaction product: a) a polyalkylether capped with a UV-curable isocyanate (including tri- or tetrafunctional polyalkylethers), b) a fluoromonomer with ethylenic functionality, c) a hydrophilic monomer such as HEMA or DMA, and d) a conventional crosslinker such as EGDMA.

While numerous attempts have been made to optimize the properties or ophthalmic lenses, particularly soft contact lenses, these attempts have fallen short of the ultimate goal of fabricating ophthalmic lenses with not only properties ideally suited for patient comfort ad corneal health during extended wear, but also outstanding mechanical properties. What is truly needed is a polymer which has the requisite properties to achieve the highest degree of patient comfort ad corneal health without appreciably sacrificing its mechanical properties when the polymer is fabricated into an ophthalmic lens, particularly a soft hydrogel contact lens.

An ophthalmic lens intended for extended wear must meet a variety of fairly stringent criteria in order to be acceptable for wear. The material making up the contact lens must in some way allow for the passage of oxygen to the eye and waste products away from the eye. With most soft hydrogel contact lenses this is accomplished by increasing the material water content (to 50% or more of the total lens weight). High water content soft contact lenses, however, can act as a wick, drawing water away from the cornea, as it evaporates from the anterior surface of the lens. This can result in a dry eye condition, potentially making the lens uncomfortable to wear.

In contrast, rigid gas permeable contact lenses do not exhibit this wicking effect primarily because of their lower water content and lower permeability of water. Another advantage of hard lenses is that they can be manufactured much thinner, thus allowing for further enhancement of oxygen transmissibility. However, hard lenses, because of their rigid, non-pliable nature, can feel uncomfortable if the lens fit is not exactly right. When poorly fit, hard lenses can cause comeal abrasion as a result of mechanical agitation during the blink cycle. Also, most rigid lenses tend not absorb protein and lipids, unlike soft, lightly crosslinked high water content hydrogel materials. The absorption of proteins and lipids results in the deterioration of the lens and loss of visual acuity.

Soft hydrophilic contact lenses have enjoyed wide acceptance because they offer a relatively high degree of comfort even after extended periods of wear. Most soft hydrophilic contact lens polymers produced over the last decade have strived to increase oxygen and carbon dioxide permeability through the lens by increasing the amount of water in the polymer. This increase in water content, however, leads to the aforementioned problem with wicking of moisture away from the eye and decreases the stiffness of the lens, resulting in poorer handling qualities. In addition, increasing the water content of a polymer tends to lower the refractive index. To address these problems, higher water content lenses are typically made thicker, further reducing oxygen transmissibility. Current high water contact lenses, for example, those that contain 65-70% water, need to be made at approximately 140 to 250 microns thick to achieve the necessary optical and other physical properties.

If a lens material is not permeable enough to oxygen and carbon dioxide, or does not allow for tear exchange by providing adequate on-eye movement, negative physiological responses will occur. Acidosis (as a result of build up of carbon dioxide, lactic acid and other acidic metabolites underneath the lens), thinning of the cornea, formation of microcysts, and stromal edema are among some of the problems associated with extended wear of low oxygen and carbon dioxide permeability contact lenses.

Permeability of a gas through a material is expressed as a quantitative value given by Dk, where D represents the diffusion coefficient of the gas through the polymer and k is the solubility constant of the gas in the polymer. The units for gas permeability are given as $(cm^2/s)(mL\ O_2/mL*mm\ Hg)$.

Despite the increased water content, current hydrogel contact lenses may not supply the cornea with enough oxygen to prevent unacceptable corneal edema levels. It is believed that extended wear contact lenses should have a minimum oxygen transmissibility (Dk/L, where L denotes average lens thickness) between $75 \times 10^{-9}$ and $90 \times 10^{-9}$ $(cm/s)(mL\ O_2/mL*mm\ Hg)$ to reduce overnight corneal edema to an acceptable level. For example a hydrogel material with a water content of 75% and a Dk of $55 \times 10^{-11}$ $(cm^2/s)(mL\ O_2/mL*mm\ Hg)$ would have to be produced at approximately 70 microns in order for its transmissibility to be $75 \times 10^{-9}$ $(cm/s)(mL\ O_2/mL*mm\ Hg)$. This hydrogel material would not provide acceptable optical or other physical properties.

It is the object of this invention to devise a contact lens material where dehydration of the lens, and therefore

the eye is of little concern and furthermore has sufficiently high oxygen permeability and mechanical strength to achieve the Dk/L criteria necessary to minimize corneal edema during extended wear.

Furthermore, it is the object of this invention to generate a polymer with sufficiently good mechanical properties to allow for the contact lens to be manufactured thin enough to provide excellent ease of handling and wearer comfort.

## SUMMARY OF THE INVENTION

In one aspect, the invention is a crosslinked polymer. The crosslinked polymer comprises the reaction product of a hydrophilic monomer and a crosslinking amount of a polyfunctional compound containing a saccharide residue.

In another aspect the invention is an ophthalmic lens. The ophthalmic lens comprises the crosslinked polymer described above.

The crosslinked polymer of this invention exhibits the requisite array of properties particularly desired for ophthalmic lenses especially soft, hydrogel contact lenses. Surprisingly, in preferred embodiments of this invention, incorporating the polyfunctional compound as a crosslinker in the polymer from which the soft hydrogel lens is derived actually enhances not only its mechanical properties, but also its properties associated with patient comfort and corneal health for extended wear applications. This is contrary to the changes in properties expected when a crosslinking monomer or prepolymer is incorporated into a polymer from which the lens is derived.

Specifically, one of the improvements observed by incorporating the polyfunctional compound into the lens is that its modulus increases, and hence its handling properties correspondingly improve. But the beneficial improvements exhibited in the properties of the lens go beyond the improved modulus. In addition, the water content of the lens unexpectedly can be increased with the incorporation of the polyfunctional compound, so that oxygen permeability through the lens likewise increases to enhance patient comfort and corneal health. The increased water content of the lens is achieved while maintaining its elongation, which means that the lens does not become more brittle and hence more fragile. All of these noteworthy changes in properties are contrary to those changes exhibited when conventional crosslinking monomers such as EGDMA are incorporated into the monomer system from which the polymerized lens is derived.

In a particularly preferred embodiment, the polymerization of the hydrophilic monomer, a suitable highly oxygen permeable monomer and the polyfunctional compound occurs in the presence of an inert diluent in a mold for an ophthalmic lens. When preferred diluents are used in combination with a monomeric mixture incorporating a preferred polyfunctional compound as the crosslinker, the shrinkage of the polymerized lens as it forms in the mold is substantially reduced relative to that of conventional monomer-diluent systems which have been previously used in the ophthalmic art.

The crosslinked polymer of this invention can be used for any application which could benefit from the optimum balance of properties it offers. Advantageously, the polymer is used for biomedical applications, particularly for the fabrication of ophthalmic lenses, such as soft hydrogel contact lenses.

The present invention achieves the above objects by recognizing that the performance and comfort characteristics exhibited by current hydrated soft contact lenses need not necessarily be accomplished by the use of highly hydrated materials with a high water content. In particular, comfort, ease of handling, excellent on-eye movement and high refractive index can be obtained in a low water lens that also possesses high oxygen permeability.

In another most preferred embodiment of the invention, such a lens is made by copolymerizing a multifunctional prepolymer with at least one hydrophilic monomer added to achieve the desired water content, at least one hydrophobic, oxygen permeable monomer to provide the necessary Dk to minimize corneal edema, a free radical initiator, and a compatibilizing diluent. The multifunctional prepolymer is a cyclic polyol with polyalkylether segments containing free radical polymerizeable groups.

The reactive monomer mixture is then placed in suitable molds and polymerized by either heat, visible or UV light, depending on the initiator system chosen.

## DETAILED DESCRIPTION OF THE INVENTION

The polyfunctional compound is a crosslinking agent containing at least two reactive polymerization sites. The number of reactive sites will depend on the particular saccharide chosen from which the compound is derived. The polymerization sites are preferably sites of ethylenic unsaturation, and each such site is preferably displayed at the terminus of a branch of the molecular chain of the compound.

The compound can be a polyfunctional monomer or oligomer, but preferably it is a polyfunctional prepolymer which has a relatively high molecular weight in comparison to conventional crosslinking agent used for the preparation of ophthalmic lenses, such as EGDMA. Preferably, the number average molecular weight of such a prepolymer is between about 700 to about 50,000. The most preferred number average molecular weight is between about 4,000 to about 20,000, and even more preferred from about 8,000 to about 12,000. If the molecular weight of the prepolymer

were less than about 700, then the crosslink density obtained when the prepolymer is polymerized with the hydrophilic monomer to form the crosslinked polymer may be undesirably high. This increased crosslink density could adversely reduce the water content of the swollen polymer, and hence its oxygen permeability. Additionally, the polymer may exhibit a decreased elongation with an undesirable increase in its brittleness. With respect to molecular weights greater than about 50,000, although it is possible to use prepolymers with these higher molecular weights, it may be difficult to process such prepolymers for the preparation of desired ophthalmic lenses. If the crosslinker is too big, the distance between the points of crosslinking becomes too large and the end result is a low modulus (i.e., floppy) lens that does not handle well.

For the purpose of delining this invention, a "saccharide residue" is a residue of a monosaccharide, an oligosaccharide, or a polysaccharide. Preferably, the saccharide residue is a monosaccharide or oligosaccharide with 1 to 6, inclusive, more preferably 1 to 5, inclusive, more preferably 1 to 3, inclusive, sugar units. Examples of some of the preferred saccharides which can be used are set forth in European Patent Application 394,496, published October 31, 1990, incorporated by reference herein. The most preferred saccharide residues are derived from monosaccharides and disaccharides. Of these, the most preferred are glucose and sucrose.

Polysaccharides can also be used for preparing the polyfunctional prepolymer. In addition, carboxyl-containing polysaccharides can be used. Examples of these include alginic acid, pectin, and certain glucosaminoglycans. Also, saccharides such as maltose, lactose, methyl-β-D- galactoside or methy-β-D- galactopyranoside and methylated deoxyribose, can be used.

A general structure for the alkoxylated saccharide crosslinker is:

$$[S(A)_n]_y$$

where S denotes the residue of a five or six membered saccharide ring i.e., the cyclic part of the molecule.

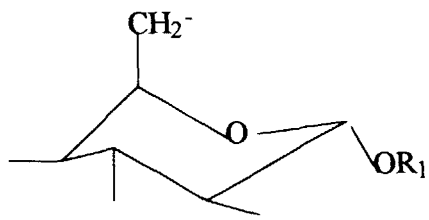

For example,
Another example of S could be

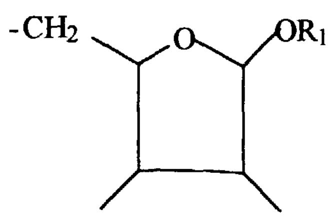

Glucose, mannose, galactose, fructose, etc. would have y = 1. Multiple ring sugars (e.g., sucrose) are represented by the special case of y = 2. The variable y could also be up to 20 for polysaccharides. Depending on the specific sugar ring, n would give the number of arms coming off the cyclic part of the molecule, preferably n is 1 to 5. For example, glucose would have n = 4 and fructose would have n = 3.

The $R_1$ group attached to the ring anomeric carbon can be any of the following:

(a) $-CH_3$;

(b) $-CH_2CH_3$;

(c) various straight chain and branched alkyl groups up to an including 20 carbon atoms

(d) aromatic rings, including benzene, phenyl, p-tolyl, and naphthyl groups

(e) acetates and other carboxylic acid esters such as:

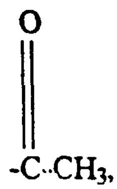, 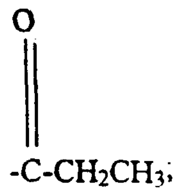; and

(f) fluorinated alkyl groups such as:
$-CF_2CF_3$, $-CF_3$, $-CF_2CF_2CF_2CF_3$, $-CH_2CF_2CF_3$, $-CH_2CH_2CF_2CF_3$.

Here A denotes only the straight chain polyethers generated by polymerizing a cyclic polyether, such as tetrahydrofuran polyethylene oxide and polypropylene oxide, preferably ethylene or propylene oxide, right off the ring directly without the use of diisocyanates. A is either:

(a) a random linear copolymer of ethylene oxide and propylene oxide with a terminally unsaturated group capable of undergoing free-radical polymerization in the presence of a themally activated or photo-activated initiator, such that

$$A = -[OCH_2CHR_2]_a-[OCH_2CHR_3]_b-X-V$$

where $R_2$ and $R_3$ can either both be H, both be $-CH_3$, or H and $CH_3$ with a and b such as to construct a random copolymer of ethylene oxide and propylene oxide, a and b will vary so that (a + b) is anywhere from 1 to 500, inclusive, and preferably from 50 to 200, inclusive. X is a linking group which is selected from the following group:

-O-; -NH-; 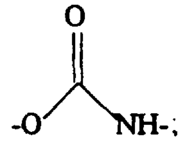 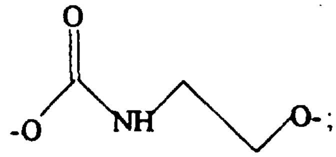

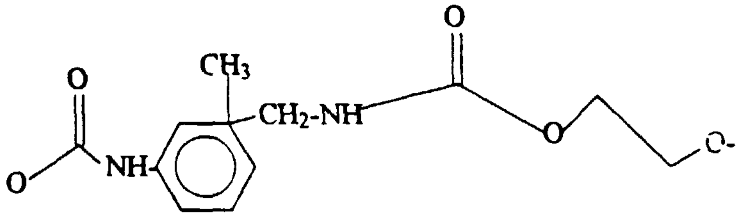 ; and

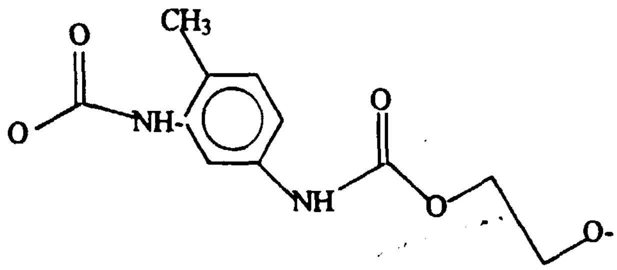

V is the unsaturated group capable of free-radical reaction and may be selected from the following group:

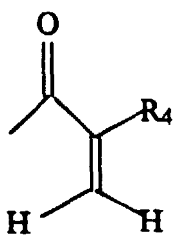

where $R_4$ = H or Me

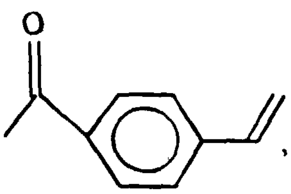, 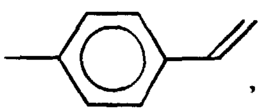, 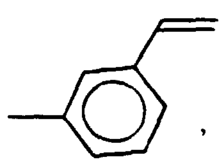, 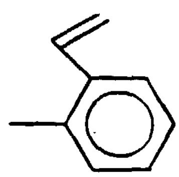

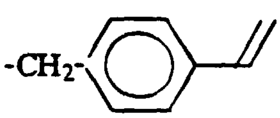, 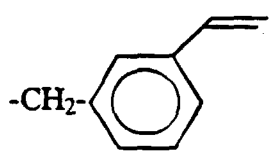

or

(b) a homopolymer of ethylene or propylene oxide where

$A = -[OCH_2CHR_5]_c-X-V$, where $R_5$ is either H or $CH_3$, with X and V defined as in paragraph (a) above and c is anywhere from about 1 to 500, inclusive.; or

(c) a block copolymer of ethylene and propylene oxide where

$A = -[OCH_2CHR_6]_d -[OCH_2CHR_7]_e -[OCH_2CHR_8]_f-X-V$, where $R_6$, $R_7$ and $R_8$ can be combinations of H or $CH_3$, and d, e and f are such that (d + e + f) varies anywhere from 2 to 500, with X and V as defined above.

These embodiments are illustrated in Examples 24 through 95 and Tables 5 through 19. The GLUCAM™ methacrylate esters from Amoco are prepared without carbamate linkages, such that the alkoxylated methyl glucoside is a straight chain polyether with no linking groups. Examples 1 through 9 show synthesis of the various GLUCAM methacrylate ester prepolymers with the remaining examples 10 through 72 showing polymers made using these GLUCAM prepolymers in conjunction with a variety of monomers, including HEMA, TRIS, DMA, NVA, mPEG350 methacrylate, etc. These materials cover water contents ranging essentially from zero to 30 to 35 percent.

The viscosity of the polymers containing the straight chain polyether materials is much lower than for polymers containing carbamate linkages, which makes processing much easier, even without heating. The mechanical properties are also very different. The elastic modulus of the straight chain polyether materials is much higher than for the carbamate materials, thereby allowing stronger polymers to be prepared, because the materials can be used in lower concentrations in conjunction with smaller molecular weight comonomers.

For the purpose of defining this invention, a "hydrophilic monomer" refers to any monomer or mixture of monomers which, when polymerized, yields a hydrophilic polymer capable of forming a hydrogel when contacted with water. Examples of hydrophilic monomers include, but are not limited to, hydroxy esters of acrylic or methacrylic acid, DMA, NVP, styrene sulfonic and carboxylic acids, and other hydrophilic monomers known in the art.

Examples of hydroxy esters of acrylic or methacrylic acid include HEMA, hydroxyethyl acrylate, glyceryl methacrylate, hydroxypropyl methacrylate, hydroxypropyl acrylate and hydroxytrimethylene acrylate. The preferred hydroxyester is HEMA.

Other preferred hydrophilic monomers are those derived from the reaction product of a suitable free radical reactive derivatizing agent with a monoalkoxy polyalkylether. The polyalkylether is desirably a polyalkylene glycol, such as PEG or PPG, or a polyalkylene glycol with amino terminals. The free radical derivatizing agent can be any methacrylate, acrylate or other vinyl-group containing species capable of reacting with alcohol or amino groups under suitable reaction conditions. Examples of such derivatizing agents include methacrylic acid, methacryloyl chloride, isocyanato ethyl methacrylate (IEM), styrene isocyanate, acrylic acid, methacrylic anhydride the reaction product of HEMA with either isophorane diisocyanate (IPDI) or toluene diisocyanate (TDI), vinyl-substituted benzyl chlorides and bromides, 4-vinyl benzoic acid, 4-vinyl benzoyl chloride, etc. To simplify the description of this invention, these preferred hydrophilic monomers will be referred to as "monocapped PEG".

The preferred monocapped PEG monomers are represented by the following formula:

$$CH_3(CH_2)_w(OCH_2CHR_{10})_s\text{-}X\text{-}V$$

wherein:

w is between 0 and 20, inclusive;
v is between 20 and 135, inclusive;
$R_{10}$ is hydrogen or methyl; and
X is a linking group which is selected from the following group:

-O- ; -NH- ; 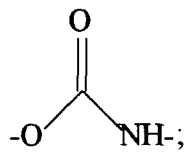 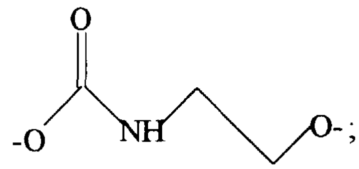

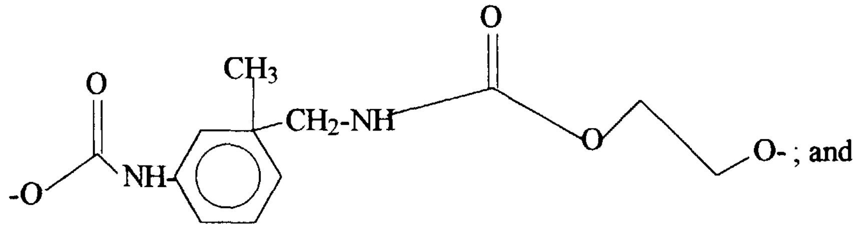

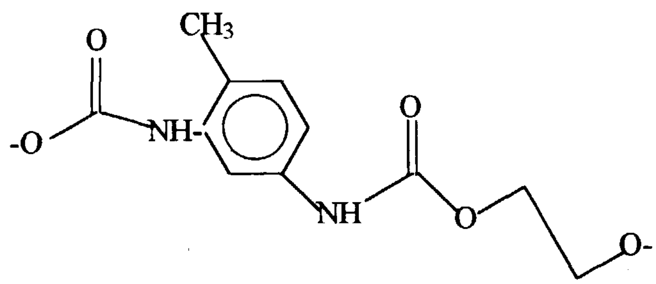

V is the unsaturated group capable of free-radical reaction and may be selected from the following group:

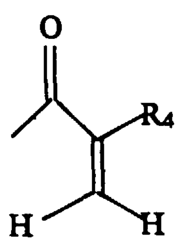

where $R_4$ = H or Me

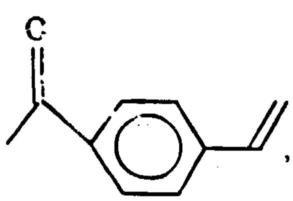, 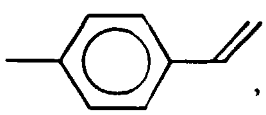, 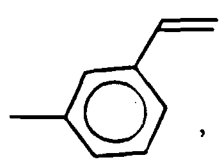, 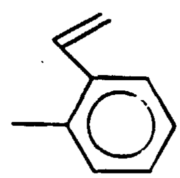,

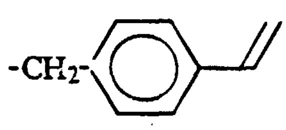, 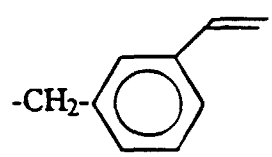

The most preferred monocapped PEGs are represented when s is between 85 and 110, inclusive; w is

between 0 and 3, inclusive; and $R_{10}$ is hydrogen.

In the preferred embodiment of the invention, the hydrophilic monomer can be a mixture of hydrophilic monomers. The preferred mixture is a mixture of monocapped PEG with DMA. In addition, it may be desirable to add a minor amount of HEMA to the hydro-hilic monomer mixture. The weight ratio of monocapped PEG to DMA in the hydrophilic monomer mixture is desirably between about 1.5:1 to about 4:1, preferably between about 1.5:1 to about 2.5:1. In addition, it may be desirable to add a minor amount of HEMA to the hydrophilic monomer mixture.

The hydrophilic monomers are preferably copolymerized with comonomers in a monomer reaction mixture to impart specific improvements in chemical and physical properties, depending on the particular application desired. For example, the equilibrium water content of an ophthalmic lens can be increased if MAA is used as a comonomer. Similarly, other components may be added for specific applications, for example, to impart UV absorbency, handling or enhancement or cosmetic tint properties to the finished lens.

In a particularly preferred embodiment, a fluorinated monomer is added as a coreactant in the reaction mixture. The preferred class of fluorinated monomers are those derived from the reaction product of a free-radical derivatizing agent with a fluorinated alcohol. The fluorinated alcohol is preferably a monohydric alcohol, preferably an aliphatic alcohol. The preferred monohydric aliphatic alcohol is a C6-30 alcohol. The most preferred fluorinated alcohol is 1H,1H,5H-perfluoro pentyl alcohol.

Advantageously, the amount of fluorinated monomer added to the reactive monomer mixture is between about 2 to about 9 weight percent of reactive components, preferably between about 5 to about 7. The incorporation of the fluorinated monomer is particularly desired for the fabrication of ophthalmic lenses because the fluorinated monomer decreases the surface energy of the finished lens to improve its resistance to deposition of ocular tear components, such as lipids and proteins. If the amount of fluorinated monomer added to the reaction mixture were less than about 2 percent, then the decrease in surface energy of a finished ophthalmic lens may not be realized. Conversely, if the amount of fluorinated monomer were greater than about 9 percent, then the optical characteristics of a finished lens may diminish, and the water content may drop as well.

In another preferred embodiment, a second crosslinking agent is added to the reaction mixture to further increase the modulus of a finished ophthalmic lens derived from the crosslinked polymer. Although this crosslinking agent can be any polyunsaturated monomer, such as EGDMA, it preferably has a number average molecular weight between about 500 to about 2000 preferably about 750-1500. Its concentration in the reactive mixture is between about 5 to about 25 weight percent of the reactive compounds, preferably about 13 to about 17 percent. A concentration less than about 5 percent may fail to increase the lens modulus, and a concentration greater than about 25 percent may negatively impact water content.

In another embodiment, it may be desirable to add fluorinated analogs of the hydrophilic monomers described above, and organosilicone monomers, to the reaction mixture to further enhance properties. Examples of these monomers are given in U.S. Patent 5,034,461, incorporated by reference herein.

In another preferred embodiement, it may be desirable to add a hydrophobic, highly oxygen permeable monomer to further enhance the resulting polymer's oxygen permeability (Dk). Examples of such monomers are silicone containing monomers like 3-methacryloxypropyltris (trimethylsiloxy)silane (Tris).

The monomer reaction mixture also includes an initiator, usually from about 0.05 to 1 percent of a free radical initiator which is thermally activated. Typical examples of such initiators include lauroyl peroxide, benzoyl peroxide, isopropyl percarbonate, azobisisobutyronitrile and known redox systems such as the ammonium persulfate-sodium metabisulfite combination and the like. Irradiation by ultraviolet light, electron beam or a radioactive source may also be employed to initiate the polymerization reaction optionally with the addition of a polymerization initiator, e.g. benzoin and its ethers, as well as charge transfer initiators such as benzophenone/amine systems known in the art.

The amount of the polyfunctional compound which is copolymerized with the hydrophilic monomer and other coreactants, if any, depends on numerous factors. This amount can be readily determined empirically. The amount chosen will depend on the molecular weight of the polyfunctional compound, its degree of functionality, and the final properties of the crosslinked polymer desired. When the polyfunctional compound chosen is a prepolymer having molecular weight between 9,000 and 20,000, and contains a glucose or sucrose residue, then the concentration of prepolymer in the reaction mixture is desirably between about 0.002 to about 0.020 moles prepolymer per 100 grams of reactive monomer component more preferably between about 0.003 to about 0.0045 moles prepolymer per 100 grams of reactive monomer components.

The polymerization of the reactive monomer mixture to form the crosslinked polymer is conveniently carried out in the presence of an inert diluent. The selection of a suitable diluent is important to solubilize the reactive components of the mixture, particularly those monomeric components which have relatively high molecular weights. Suitable diluents for the polymerization of the reactive monomers described herein are disclosed in U.S. Patent Nos. 4,680,336; 4,889,664; 5,039,459; 5,457,140; 5,490,959; 5,490,960; 5,494,043; 5,498,379; and 5,684,058. All these patents are incorporated herein by reference.

For purposes of describing this invention, an "ophthalmic lens" is any lens adapted for placement on the cornea

or in the eye. Examples of such lenses include scleral lenses, contact lenses, intraocular lenses and corneal bandage lenses. The most preferred ophthalmic lens is a contact lens. The most preferred contact lens is a soft hydrogel lens. A hydrogel lens can be prepared by swelling the crosslinked polymer of this invention, which has been shaped in the form of the lens, with a significant amount of water.

The preferred methods for forming the desired lens in the presence of a suitable inert diluent include the well known methods of centrifugal casting and cast molding, for example using molds described in U.S. Patent 4,568,348.

When the polymerization reaction to prepare the lens is sufficiently complete, the lens can be hydrated to its equilibrium water content. Preferably, the water content of the lens will range from about 35 to about 85 weight percent, more preferably from about 55 to about 75 weight percent. This range is considered ideal for extended wear applications where patient comfort, corneal health and handling characteristics are critical properties.

The following examples set forth the most preferred embodiments of this invention. These examples are illustrative only, and should not be interpreted to limit the scope of this invention as set forth in the appended claims. Numerous additional embodiments within the scope and spirit of the claimed invention will become readily apparent to those skilled in the art upon a detailed review of this specification.

## Test Method 1

## Oxygen Permeability (Dk)

The oxygen permeability through the lens is expressed as the Dk value multiplied by 10-11 in units of $cm^2$ ml $O_2$/s ml mm Hg. It is measured using a polagraphic oxygen sensor consisting of a 4 mm diameter gold cathode and silver- silver chloride ring anode.

## Test Method 2

## Tensile Properties (Modulus Elongation and Strength]

The lens to be tested is cut to the desired specimen size and shape and the cross-sectional area measured. The specimen is then attached into the upper grip of a constant rate-of-crosshead-movement type of testing machine equipped with a load cell. The crosshead is lowered to the initial gauge length and the specimen attached to the fixed grip. The specimen is then elongated at a constant rate of strain and the resulting stress- strain curve is recorded. The elongation is expressed in percent and the tensile modulus and strength is expressed in psi (pounds per square inch).

## Test Method 3

## Gravimetric Water Content (Equilibrium Water Content-EWC)

Flat discs are made which weigh approximately 5-8 grams. These discs are equilibrated in physiological saline, weighed and then dehydrated and weighed. The gravimetric water content is expressed as a percent difference after a constant weight is recorded.

## Example 1

A total of 50g of dry GLUCAM PEP (7.44mmol, water<0.04%) is poured into a flame dried, three necked 1L, round bottom flask set up with a magnetic stirring bar, a 60mL addition funnel, a drying tube filled with indicating DRIERITE, and a nitrogen gas inlet. A solution of methylene chloride (125g) containing 80mg of stannous octoate and 50mg of 2,6-di(t-butyl)-4-methoxyphenol are added to the 1L round bottom flask and allowed to mix thoroughly with the GLUCAM already in the flask. The addition flannel is charged with 25g of methylene chloride and 4.45g of 2-isocyanatoethyl methacrylate (IEM, 0.029mol) and these are added dropwise, with vigorous stirring, to the 1L reaction flask. The addition should be carried out slowly, preferably over 2 period of no less than 3 hrs. The reaction flask contents were then allowed to stir at room temperature for 48 hrs until the reaction is deemed complete. The reaction is monitoring the disappearance of the isocyanate carbonyl absorption at 2260 cm-1.

Once the reaction is complete, the contents of the reaction flask are poured into a 1L rotovap flask and the solvent stripped under reduced pressure. Residual methylene chloride in the product can be removed azeotropically with small amounts of absolute methanol.

**Example 2**

A total of 200g of dry GLUCAM PEP (0.030mol, water<0.04%) is poured into a three necked 2L, two-piece jacketed round bottom flask set up with a mechanical stirrer, a 500mL addition funnel, and a drying tube filled with indicating DRIERITE. Dry ethylene glycol dimethyl ether (600g, water <0.04%), 22.7g of triethylamine (0.224mol), and 367mg of N,N-dimethylaminopyridine (DMAP, 0.003mol) are then added to the round bottom flask. The reaction flask contents are then heated, while stirring, to 40°C. At this point a mixture consisting of 34.5g of methacrylic anhydride (0.224mol) and ethylene glycol dimethyl ether (250g) is charged to the 500mL addition funnel and added dropwise to the reaction flask over a 7-8 hour period. The addition should be carried out slowly, otherwise the product will take on an orange to dark amber coloration presumably due to a condensation product of the anhydride. After the anhydride addition is completed, the flannel is rinsed with 50mL of ethylene glycol dimethyl ether. The reaction temperature is maintained at 40°C throughout the addition.

The reaction is monitored by analyzing aliquots of the reaction mixture worked up using the procedure given below. The reaction is considered to be complete whenever the molar amount of capped hydroxyls (as determined by hydrolysis of the product and measurement of generated methacrylic acid) exceeds 85% of the total (based on hydroxyl value of the starting GLUCAM). This conversion is arrived at by simply allowing the reaction to stand for 5 to 7 days. Alternatively, the reaction progress can also be monitored by following the decrease in intensity of the anhydride carbonyl at 1780 cm-1 (since the anhydride is used in excess, this absorption never disappears completely) or by following the appearance of the ester carbonyl at 1724 cm-1.

Once capping of >85% is achieved the temperature of the reaction flask is decreased to 25°C, and 100mL of deionized water is added to the round bottom flask. To avoid basic hydrolysis of the ester, the pH of the reaction mixture, which typically is about 9.0, is adjusted to 7.0 using a 5% aqueous hydrochloric acid solution. A total of 600g of Amberlite IRA 96 (3:1 weight ratio relative to the GLUCAM product) is also added to the round bottom flask and stirred for one and a half hours. Amberlite IRA 96 is a polystrene-based anionic exchange resin used to remove the methacrylate salts formed as by-products of the reaction. Disappearance of the anhydride peak (1780 cm-1) is monitored by FTIR. At the end of this period the Amberlite is vacuum filtered, and the ethylene glycol dimethyl ether is removed from the filtrate in a rotary evaporator under reduced pressure. Conditions for the rotary evaporation are (approximately): 120 RPM, bath temperature 30-35°C, and the pressure is slowly reduced to maintain maximum solvent removal.

Next, the Glucam product/water mixture is reconstituted with chloroform (approximately 1L). The resulting liquid is then washed with an equal volume of 5% aqueous solution of sodium bicarbonate twice and then washed with saturated sodium chloride solution once. Subsequently, the organic layer is passed through a 400g silica bed (2:1 ratio of silica to product, approximate bed size: 75mm diameter column, 440mm high). Next the chloroform is removed under reduced pressure in the same manner as previously described. Approximately 75mL methanol are then added to the Rotovap flask and stirred for 30 minutes. Subsequently, the methanol was removed under reduced pressure (the purpose of this last operation is to remove residual chloroform azeotropically with methanol).

**Example 3**

A total of 200g of dry GLUCAM 201A (0.034mol, water<0.04%) is poured into a three necked 2L, two-piece jacketed round bottom flask set up with a mechanical stirrer, a 500mL addition funnel, and a drying tube filled with indicating DRIERITE. Dry ethylene glycol dimethyl ether (600g, water <0.04%), 25.6g of triethylamine (0.253mol), and 415mg of N,N-dimethylaminopyridine (DMAP, 0.0034mol) are then added to the round bottom flask. The reaction flask contents are then heated, while stirring, to 40°C. At this point a mixture consisting of 39.0g of methacrylic anhydride (0.253mol) and ethylene glycol dimethyl ether (250g) is charged to the 500mL addition tunnel and added dropwise to the reaction flask over a 7-8 hour period. The addition should be carried out slowly, otherwise the product will take on an orange to dark amber coloration presumably due to a condensation product of the anhydride. After the anhydride addition is completed, the funnel is rinsed with 50mL of ethylene glycol dimethyl ether. The reaction temperature is maintained at 40°C throughout the addition.

The reaction is monitored by analyzing aliquots of the reaction mixture worked up using the procedure given below. The reaction is considered to be complete whenever the molar amount of capped hydroxyls (as determined by hydrolysis of the product and measurement of generated methacrylic acid) exceeds 85% of the total (based on hydroxyl value of the starting GLUCAM). This conversion is arrived at by simply allowing the reaction to stand for 5 to 7 days. Alternatively, the reaction progress can also be monitored by following the decrease in intensity of the anhydride carbonyl at 1780 cm-1 (since the anhydride is used in excess, this absorption never disappears completely) or by following the appearance of the ester carbonyl at 1724 cm-1.

Once capping of >85% is achieved, the temperature of the reaction flask is decreased to 25°C, and 100mL of deionized water is added to the round bottom flask. To avoid basic hydrolysis of the ester, the pH of the reaction mixture, which typically is about 9.0, is adjusted to 7.0 using a 5% aqueous hydrochloric acid solution. A total of 600g of Amberlite IRA 96 (3:1 weight ratio relative to the GLUCAM product) is also added to the round bottom flask and stirred for one and a half hours. Amberlite IRA 96 is a polystrene-based anionic exchange resin used to remove the methacrylate salts formed as by-products of the reaction. Disappearance of the anhydride peak (1780 cm-1) is monitored by FTIR. At the end of this period, the Amberlite is vacuum filtered, and the ethylene glycol dimethyl ether is removed from the filtrate in a rotary evaporator under reduced pressure. Conditions for the rotary evaporation are (approximately); 120 RPM, bath temperature 30-35°C, and the pressure is slowly reduced to maintain maximum solvent removal.

Next, the Glucam product/water mixture is reconstituted with chloroform (approximately 1L). The resulting liquid is then washed with an equal volume of 5% aqueous solution of sodium bicarbonate twice and then washed with saturated sodium chloride solution once. Subsequently, the organic layer is passed through a 400g silica bed (2:1 ratio of silica to product, approximate bed size: 75mm diameter column, 440mm high). Next the chloroform is removed under reduced pressure in the same manner as previously described. Approximately 75mL methanol are then added to the Rotovap flask and stirred for 30 minutes. Subsequently, the methanol was removed under reduced pressure (the purpose of this last operation is to remove residual chloroform azeotropically with methanol).

## Example 4

A total of 200g of dry GLUCAM 201B (0.031mol, water<0.04%) is poured into a three necked 2L, two-piece jacketed round bottom flask set up with a mechanical stirrer, a 500mL addition funnel, and a drying tube filled with indicating DRIERITE. Dry ethylene glycol dimethyl ether (600g, water <0.04%), 23.3g of triethylamine (0.231mol), and 378mg of N,N-dimethylaminopyridine (DMAP, 0.0031mol) are then added to the round bottom flask. The reaction flask contents are then heated, while stirring to 40°C. At this point a mixture consisting of 35.6g of methacrylic anhydride (0.231mol) and ethylene glycol dimethyl ether (250g) is charged to the 500mL addition flannel and added dropwise to the reaction flask over a 7-8 hour period. The addition should be carried out slowly, otherwise the product will take on an orange to dark amber coloration presumably due to a condensation product of the anhydride. After the anhydride addition is completed, the funnel is rinsed with 50mL of ethylene glycol dimethyl ether. The reaction temperature is maintained at 40°C throughout the addition.

The reaction is monitored by analyzing aliquots of the reaction mixture worked up using the procedure given below. The reaction is considered to be complete whenever the molar amount of capped hydroxyls (as determined by hydrolysis of the product and measurement of generated methacrylic acid) exceeds 85% of the total (based on hydroxyl value of the starting GLUCAM). This conversion is arrived at by simply allowing the reaction to stand for 5 to 7 days. Alternatively, the reaction progress can also be monitored by following the decrease in intensity of the anhydride carbonyl at 1780 cm-1 (since the anhydride is used in excess, this absorption never disappears completely) or by following the appearance of the ester carbonyl at 1724 cm-1.

Once capping of >85% is achieved, the temperature of the reaction flask is decreased to 25°C, and 100mL of deionized water is added to the round bottom flask. To avoid basic hydrolysis of the ester, the pH of the reaction mixture, which typically is about 9.0, is adjusted to 7.0 using a 5% aqueous hydrochloric acid solution. A total of 600g of Amberlite IRA 96 (3:1 weight ratio relative to the GLUCAM product) is also added to the round bottom flask and stirred for one and a half hours. Amberlite IRA 96 is a polystrene-based anionic exchange resin used to remove the methacrylate salts formed as by-products of the reaction. Disappearance of the anhydride peak (1780 cm-1) is monitored by FTIR. At the end of this period, the Amberlite is vacuum filtered, and the ethylene glycol dimethyl ether is removed from the filtrate in a rotary evaporator under reduced pressure. Conditions for the rotary evaporation are (approximately): 120 RPM, bath temperature 30-35°C, and the pressure is slowly reduced to maintain maximum solvent removal.

Next, the Glucam product/water mixture is reconstituted with chloroform (approximately 1L). The resulting liquid is then washed with an equal volume of 5% aqueous solution of sodium bicarbonate twice and then washed with saturated sodium chloride solution once. Subsequently, the organic layer is passed through a 400g silica bed (2:1 ratio of silica to product, approximate bed size: 75mm diameter column, 440mm high). Next the chloroform is removed under reduced pressure in the same manner as previously described. Approximately 75mL methanol are then added to the Rotovap flask and stirred for 30 minutes. Subsequently, the methanol was removed under reduced pressure (the purpose of this last operation is to remove residual chloroform azeotropically with methanol).

## Example 5

A total of 200g of dry GLUCAM 201C (0.028mol. water<0.04%) is poured into a three necked 2L, two-piece jacketed round bottom flask set up with a mechanical stirrer, a 500mL addition funnel, and a drying tube filled with indicating DRIERITE. Dry ethylene glycol diethyl ether (600g, water <0.04%), 21.0g of triethylamine (0.208mol), and 342mg of N,N-dimethylaminopyridine (DMAP), 0.0028mol) are then added to the round bottom flask. The reaction flask contents are then heated, while stirring, to 40°C. At this point a mixture consisting of 32.1g of methacrylic anhydride (0.208mol) and ethylene glycol dimethyl ether (250g) is charged to the 500mL addition funnel and added dropwise to

the reaction flask over a 7-8 hour period. The addition should be carried out slowly, otherwise the product will take on an orange to dark amber coloration presumably due to a condensation product of the anhydride. After the anhydride addition is completed the funnel is rinsed with 50mL of ethylene glycol diethyl ether. The reaction temperature is maintained at 40°C throughout the addition.

The reaction is monitored by analyzing aliquots of the reaction mixture worked up using the procedure given below. The reaction is considered to be complete whenever the molar amount of capped hydroxyls (as determined by hydrolysis of the product and measurement of generated methacrylic acid) exceeds 85% of the total (based on hydroxyl value of the starting GLUCAM). This conversion is arrived at by simply allowing the reaction to stand for 5 to 7 days. Alternatively, the reaction progress can also be monitored by following the decrease in intensity of the anhydride carbonyl at 1780 cm-1 (since the anhydride is used in excess, this absorption never disappears completely) or by following the appearance of the ester carbonyl at 1724 cm-1.

Once capping of >85% is achieved, the temperature of the reaction flask is decreased to 25°C, and 100mL of deionized water is added to the round bottom flask. To avoid basic hydrolysis of the ester, the pH of the reaction mixture, which typically is about 9.0, is adjusted to 7.0 using a 5% aqueous hydrochloric acid solution. A total of 600g of Amberlite IRA 96 (3:1 weight ratio relative to the GLUCAM product) is also added to the round bottom flask and stirred for one and a half hours. Amberlite IRA 96 is a polystrene-based anionic exchange resin used to remove the methacrylate salts formed as by-products of the reaction. Disappearance of the anhydride peak (1780 cm-1) is monitored by FTIR. At the end of this period, the Amberlite is vacuum filtered, and the ethylene glycol dimethyl ether is removed from the filtrate in a rotary evaporator under reduced pressure. Conditions for the rotary evaporation are (approximately): 120 RPM, bath temperature 30-35°C, and the pressure is slowly reduced to maintain maximum solvent removal.

Next, the Glucam product/water mixture is reconstituted with chloroform (approximately 1L). The resulting liquid is then washed with an equal volume of 5% aqueous solution of sodium bicarbonate twice and then washed with saturated sodium chloride solution once. Subsequently, the organic layer is passed through a 400g silica bed (2:1 ratio of silica to product, approximate bed size: 75mm diameter column, 440mm high). A total of 100mg of 4-methoxyphenol are added to the dried chloroform solution of the product to prevent polymerization of the material during subsequent work up steps. Chloroform is then removed under reduced pressure in the same manner as previously described. Approximately 75mL methanol are then added to the Rotovap flask and stirred for 30 minutes. Subsequently, the methanol was removed under reduced pressure (the purpose of this last operation is to remove residual chloroform azeotropically with methanol).

## Example 6

A total of 200g of dry GLUCAM 301B (0.025mol, water<0.04%) is poured into a three necked 2L, two-piece jacketed round bottom flask set up with a mechanical stirrer, a 500mL addition funnel, and a drying tube filled with indicating DRIERITE. Dry ethylene glycol dimethyl ether (600g, water <0.04%), 18.8g of triethylamine (0.186mol), and 305mg of N,N-dimethylaminopyridine (DMAP, 0.0025mol) are then added to the round bottom flask. The reaction flask contents are then heated, while stirring, to 40°C. At this point a mixture consisting of 28.7g of methacrylic anhydride (0.186mol) and ethylene glycol dimethyl ether (250g) is charged to the 500mL addition funnel and added dropwise to the reaction flask over a 7-8 hour period. The addition should be carried out slowly, otherwise the product will take on an orange to dark amber coloration presumably due to a condensation product of the anhydride. After the anhydride addition is completed, the funnel is rinsed with 50 mL of ethylene glycol dimethyl ether. The reaction temperature is maintained at 40°C throughout the addition.

The reaction is monitored by analyzing aliquots of the reaction mixture worked up using the procedure given below. The reaction is considered to be complete whenever the molar amount of capped hydroxyls (as determined by hydrolysis of the product and measurement of generated methacrylic acid) exceeds 85% of the total (based on hydroxyl value of the starting GLUCAM). This conversion is arrived at by simply allowing the reaction to stand for 5 to 7 days. Alternatively, the reaction progress can also be monitored by following the decrease in intensity of the anhydride carbonyl at 1780 cm-1 (since the anhydride is used in excess, this absorption never disappears completely) or by following the appearance of the ester carbonyl at 1724 cm-1.

Once capping of >85% is achieved, the temperature of the reaction flask is decreased to 25°C, and 100mL of deionized water is added to the round bottom flask. To avoid basic hydrolysis of the ester, the pH of the reaction mixture, which typically is about 9.0, is adjusted to 7.0 using a 5% aqueous hydrochloric acid solution. A total of 600g of Amberlite IRA 96 (3:1 weight ratio relative to the GLUCAM product) is also added to the round bottom flask and stirred for one and a half hours. Amberlite IRA 96 is a polystrene-based anionic exchange resin used to remove the methacrylate salts formed as by-products of the reaction. Disappearance of the anhydride peak (1780 cm-1) is monitored by FTIR. At the end of this period, the Amberlite is vacuum filtered, and the ethylene glycol dimethyl ether is removed from the filtrate in a rotary evaporator under reduced pressure. Conditions for the rotary evaporation are (approximately): 120 RPM bath temperature 30-35°C, and the pressure is slowly reduced to maintain maximum solvent removal.

Next, the Glucam product/water mixture is reconstituted with chloroform (approximately 1L). The resulting liquid is then washed with an equal volume of 5% aqueous solution of sodium bicarbonate twice and then washed with saturated sodium chloride solution once. Subsequently, the organic layer is passed through a 400g silica bed (2:1 ratio or silica to product, approximate bed size: 75mm diameter column, 440mm high). Next the chloroform is removed under reduced pressure in the same manner as previously described. Approximately 75mL methanol are then added to the Rotovap flask and stirred for 30 minutes. Subsequently, the methanol was removed under reduced pressure (the purpose of this last operation is to remove residual chloroform azeotropically with methanol).

**Example 7**

A total of 200g of dry GLUCAM 401B (0.025mol, water<0.04%) is poured into a three necked 2L, two-piece jacketed round bottom flask set up with a mechanical stirrer, a 500mL addition funnel, and a drying tube filled with indicating DRIERITE. Dry ethylene glycol dimethyl ether (600g, water <0.04%), 18.8g of triethylamine (0.186mol), and 305mg of N,N-dimethylaminopyridine (DMAP, 0.0025mol) are then added to the round bottom flask. The reaction flask contents are then heated, while stiring, to 40°C. At this point a mixture consisting of 28.7g of methacrylic anhydride (0.186mol) and ethylene glycol dimethyl ether (250g) is charged to the 500mL addition funnel and added dropwise to the reaction flask over a 7-8 hour period. The addition should be carried out slowly, otherwise the product will take on an orange to dark amber coloration presumably due to a condensation product of the anhydride. After the anhydride addition is completed, the funnel is rinsed with 50mL of ethylene glycol dimethyl ether. The reaction temperature is maintained at 40°C throughout the addition.

The reaction is monitored by analyzing aliquots of the reaction mixture worked up using the procedure given below. The reaction is considered to be complete whenever the molar amount of capped hydroxyls (as determined by hydrolysis of the product and measurement of generated methacrylic acid) exceeds 85% of the total (based on hydroxyl value of the starting GLUCAM). This conversion is arrived at by simply allowing the reaction to stand for 5 to 7 days. Alternatively, the reaction progress can also be monitored by following the decrease in intensity of the anhydride carbonyl at 1780 cm-1 (since the anhydride is used in excess this absorption never disappears completely) or by following the appearance of the ester carbonyl at 1724 cm-1.

Once capping of >85% is achieved, the temperature of the reaction flask is decreased to 25°C, and 100mL of deionized water is added to the round bottom flask. To avoid basic hydrolysis of the ester, the pH of the reaction mixture, which typically is about 9.0, is adjusted to 7.0 using a 5% aqueous hydrochloric acid solution. A total of 600g of Amberlite IRA 96 (3:1 weight ratio relative to the GLUCAM product) is also added to the round bottom flask and stirred for one and a half hours. Amberlite IRA 96 is a polystrene-based anionic exchange resin used to remove the methacrylate salts formed as by-products of the reaction. Disappearance of the anhydride peak (1780 cm-1) is monitored by FTIR. At the end of this period, the Amberlite is vacuum filtered, and the ethylene glycol dimethyl ether is removed from the filtrate in a rotary evaporator under reduced pressure. Conditions for the rotary evaporation are (approximately): 120 RPM, bath temperature 30-35°C, and the pressure is slowly reduced to maintain maximum solvent removal.

Next, the Glucam product/water mixture is reconstituted with chloroform (approximately 1L). The resulting liquid is then washed with an equal volume of 5% aqueous solution of sodium bicarbonate twice and then washed with saturated sodium chloride solution once. Subsequently, the organic layer is passed through a 400g silica bed (2:1 ratio of silica to product, approximate bed size: 75mm diameter column, 440mm high). Next the chloroform is removed under reduced pressure in the same manner as previously described. Approximately 75mL methanol are then added to the Rotovap flask and stirred for 30 minutes. Subsequently, the methanol was removed under reduced pressure (the purpose of this last operation is to remove residual chloroform azeotropically with methanol).

**Example 8**

A total of 200g of dry GLUCAM 202B (0.028mol, water<0.04%) is poured into a three necked 2L, two-piece jacketed round bottom flask set up with a mechanical stirrer, a 500mL addition funnel and a drying tube filled with indicating DRIERITE. Dry ethylene glycol dimethyl ether (600g, water <0.04%), 21.0g of triethylamine (0.208mol), and 342mg of N,N-dimethylaminopyridine (DMAP, 0.0028mol) are then added to the round bottom flask. The reaction flask contents are then heated, while stirring, to 40°C. At this point a mixture consisting of 32.1g of methacrylic anhydride (0.208mol) and ethylene glycol dimethyl ether (250g) is charged to the 500mL addition funnel and added dropwise to the reaction flask over a 7-8 hour period. The addition should be carried out slowly, otherwise the product will take on an orange to dark amber coloration presumably due to a condensation product of the anhydride. After the anhydride addition is completed, the funnel is rinsed with 50mL of ethylene glycol dimethyl ether. The reaction temperature is maintained at 40°C throughout the addition.

The reaction is monitored by analyzing aliquots of the reaction mixture worked up using the procedure given below. The reaction is considered to be complete whenever the molar amount of capped hydroxyls (as determined by

hydrolysis of the product and measurement of generated methacrylic acid) exceeds 85% of the total (based on hydroxyl value of the starting GLUCAM). This conversion is arrived at by simply allowing the reaction to stand for 5 to 7 days. Alternatively, the reaction progress can also be monitored by following the decrease in intensity of the anhydride carbonyl at 1780 cm-1 (since the anhydride is used in excess, this absorption never disappears completely) or by following the appearance of the ester carbonyl at 1724 cm-1.

Once capping of >85% is achieved, the temperature of the reaction flask is decreased to 25°C, and 100mL of deionized water is added to the round bottom flask. To avoid basic hydrolysis of the ester, the pH of the reaction mixture, which typically is about 9.0, is adjusted to 7.0 using a 5% aqueous hydrochloric acid solution. A total of 600g of Amberlite IRA 96 (3:1 weight ratio relative to the GLUCAM product) is also added to the round bottom flask and stirred for one and a half hours. Amberlite IRA 96 is a polystrene-based anionic exchange resin used to remove the methacrylate salts formed as by-products of the reaction. Disappearance of the anhydride peak (1780 cm-1) is monitored by FTIR. At the end of this period, the Amberlite is vacuum filtered, and the ethylene glycol dimethyl ether is removed from the filtrate in a rotary evaporator under reduced pressure. Conditions for the rotary evaporation are (approximately): 120 RPM, bath temperature 30-35°C, and the pressure is slowly reduced to maintain maximum solvent removal.

Next, the Glucam product/water mixture is reconstituted with chloroform (approximately 1L). The resulting liquid is then washed with an equal volume of 5% aqueous solution of sodium bicarbonate twice and then washed with saturated sodium chloride solution once. Subsequently, the organic layer is passed through a 400g silica bed (2:1 ratio of silica to product, approximate bed size: 75mm diameter column, 440mm high). Next the chloroform is removed under reduced pressure in the same manner as previously described. Approximately 75mL methanol are then added to the Rotovap flask and stirred for 30 minutes. Subsequently, the methanol was removed under reduced pressure (the purpose of this last operation is to remove residual chloroform azeotropically with methanol).

## Example 9

A total of 200g of dry GLUCAM 302B (0.028mol, water<0.04%) is poured into a three necked 2L, two-piece jacketed round bottom flask set up with a mechanical stirrer, a 500mL addition tunnel, and a drying tube filled with indicating DRIERITE. Dry ethylene glycol dimethyl ether (600g, water <0.04%), 21.0g of triethylamine (0.208mol), and 342mg of N,N-dimethylaminopyridine (DMAP, 0.0028mol) are then added to the round bottom flask. The reaction flask contents are then heated, while stirring, to 40°C. At this point a mixture consisting of 32.1g of methacrylate anhydride (0.208mol) and ethylene glycol dimethyl ether (250g) is charged to the 500mL addition funnel and added dropwise to the reaction flask over a 7-8 hour period. The addition should be carried out slowly, otherwise the product will take on an orange to dark amber coloration presumably due to a condensation product of the anhydride. After the anhydride addition is completed, the funnel is rinsed with 50mL of ethylene glycol dimethyl ether. The reaction temperature is maintained at 40°C throughout the addition.

The reaction is monitored by analyzing aliquots of the reaction mixture worked up using the procedure given below. The reaction is considered to be complete whenever the molar amount of capped hydroxyls (as determined by hydrolysis of the product and measurement of generated methacrylic acid) exceeds 85% of the total (based on hydroxyl value of the staring GLUCAM). This conversion is arrived at by simply allowing the reaction to stand for 5 to 7 days. Alternatively, the reaction progress can also be monitored by following the decrease in intensity of the anhydride carbonyl at 1780 cm-1 (since the anhydride is used in excess, this absorption never disappears completely) or by following the appearance of the ester carbonyl at 1724 cm-1.

Once capping of >85% is achieved the temperature of the reaction flask is decreased to 25°C, and 100mL of deionized water is added to the round bottom flask. To avoid basic hydrolysis of the ester, the pH of the reaction mixture, which typically is about 9.0, is adjusted to 7.0 using a 5% aqueous hydrochloric acid solution. A total of 600g of Amberlite IRA 96 (3:1 weight ratio relative to the GLUCAM product) is also added to the round bottom flask and stirred for one and a half hours. Amberlite IRA 96 is a polystrene-based anionic exchange resin used to remove the methacrylate salts formed as by-products of the reaction. Disappearance of the anhydride peak (1780 cm-1) is monitored by FTIR. At the end of this period the Amberlite is vacuum filtered, and the ethylene glycol dimethyl ether is removed from the filtrate in a rotary evaporator under reduced pressure. Conditions for the rotary evaporation are (approximately): 120 RPM, bath temperature 30-35°C, and the pressure is slowly reduced to maintain maximum solvent removal.

Next, the Glucam product/water mixture is reconstituted with chloroform (approximately 1L). The resulting liquid is then washed with an equal volume of 5% aqueous solution of sodium bicarbonate twice and then washed with saturated sodium chloride solution once. Subsequently, the organic layer is passed through a 400g silica bed (2:1 ratio of silica to product, approximate bed size: 75mm diameter column, 440mm high). Next the chloroform is removed under reduced pressure in the same manner as previously described. Approximately 75mL methanol are then added to the Rotovap flask and stirred for 30 minutes. Subsequently, the methanol was removed under reduced pressure (the purpose of this last operation is to remove residual chloroform azeotropically with methanol).

## Example 10

A total of 200g of dry GLUCAM 402B (0.024mol, water<0.04%) is poured into a three necked 2L, two-piece jacketed round bottom flask set up with a mechanical stirrer a 500mL addition funnel, and a drying tube filled with indicating DRIERITE. Dry ethylene glycol dimethyl ether (600g, water <0.04%), 18.1g of triethylamine (0.179mol), and 293mg of N,N-dimethylaminopyridine (DMAP, 0.0024mol) are then added to the round bottom flask. The reaction flask contents are then heated, while stirring, to 40°C. At this point a mixture consisting of 27.6g of methacrylic anhydride (0.179mol) and ethylene glycol dimethyl ether (250g) is charged to the 500mL addition funnel and added dropwise to the reaction flask over a 7-8 hour period. The addition should be carried out slowly, otherwise the product will take on an orange to dark amber coloration presumably due to a condensation product of the anhydride. After the anhydride addition is completed the funnel is rinsed with 50mL of ethylene glycol dimethyl ether. The reaction temperature is maintained at 40°C throughout the addition.

The reaction is monitored by analyzing aliquots of the reaction mixture worked up using the procedure given below. The reaction is considered to be complete whenever the molar amount of capped hydroxyls (as determined by hydrolysis of the product and measurement of generated methacrylic acid) exceeds 85% of the total (based on hydroxyl value of the starting GLUCAM). This conversion is arrived at by simply allowing the reaction to stand for 5 to 7 days. Alternatively, the reaction progress can also be monitored by following the decrease in intensity of the anhydride carbonyl at 1780 cm-1 (since the anhydride is used in excess, this absorption never disappears completely) or by following the appearance of the ester carbonyl at 1724 cm-1.

Once capping of >85% is achieved, the temperature of the reaction flask is decreased to 25°C, and 100mL of deionized water is added to the round bottom flask. To avoid basic hydrolysis of the ester, the pH of the reaction mixture, which typically is about 9.0, is adjusted to 7.0 using a 5% aqueous hydrochloric acid solution. A total of 600g of Amberlite IRA 96 (3:1 weight ratio relative to the GLUCAM product) is also added to the round bottom flask and stirred for one and a half hours. Amberlite IRA 96 is a polystrene-based anionic exchange resin used to remove the methacrylate salts formed as by-products of the reaction. Disappearance of the anhydride peak (1780 cm-1) is monitored by FTIR. At the end of this period, the Amberlite is vacuum filtered, and the ethylene glycol dimethyl ether is removed from the filtrate in a rotary evaporator under reduced pressure. Conditions for the rotary evaporation are (approximately): 120 RPM, bath temperature 30-35°C, and the pressure is slowly reduced to maintain maximum solvent removal.

Next, the Glucam product/water mixture is reconstituted with chloroform (approximately 1L). The resulting liquid is then washed with an equal volume of 5% aqueous solution of sodium bicarbonate twice and then washed with saturated sodium chloride solution once. Subsequently, the organic layer is passed through a 400g silica bed (2:1 ratio of silica to product, approximate bed size: 75mm diameter column, 440mm high). Next the chloroform is removed under reduced pressure in the same manner as previously described. Approximately 75mL methanol are then added to the Rotovap flask and stirred for 30 minutes. Subsequently, the methanol was removed under reduced pressure (the purpose of this last operation is to remove residual chloroform azeotropically with methanol).

## Examples 11-15

In these examples the GLUCAM PEP/IEM adduct (example 1) was employed as crosslinker in conjunction with 3-methacryloxypropyltris-(trimethylsiloxy)silane (TRIS) and 2-hydroxy-2-methylpropiophenone (Darocur 1173) as photoinitiator making up the reactive monomer mixture. The following is an illustrative preparation:

A monomer mixture containing 94.6% by weight of the GLUCAM PEP/IEM derivative described in example 1, 5% TRIS and 0.4% Darocur 1173 is thoroughly mixed at room temperature until it became homogeneous. The mixture is then allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the flame by swelling in isopropanol for 5 minutes. The lenses are then extracted with isopropanol for 24 hrs, rinsed with deionized water and allowed to equilibrate in physiological saline.

## Examples 16-21

In these examples either the GLUCAM PEP or the GLUCAM 202B methacrylic anhydride adducts (examples 2 and 8, respectively) were employed as crosslinkers in conjunction with 3-methacryloxypropyltris-(trimethylsiloxy)silane (TRIS) and 2-hydroxy-2-methylpropiophenone (Darocur 1173) as photoinitiator making up the formulation. The following is an illustrative preparation:

A formulation containing 89.6% by weight of the GLUCAM 202B methacrylic anhydride adduct described in Example 8, 10% of TRIS and 0.4% Darocur 1173 is placed into an appropriately sized container, and thoroughly mixed at room temperature until it becomes homogeneous. The mixture is then allowed to stir under reduced pressure (40

mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs, rinsed with deionized water and allowed to equilibrate in physiological saline.

## Examples 22-25

In these examples either the GLUCAM 201B or the GLUCAM 401B methacrylic anhydride adducts (examples 4 and 7, respectively) were employed as crosslinkers in conjunction with 3-methacryloxypropyltris-(trimethylsiloxy)silane (TRIS) and 2-hydroxy-2-methylpropiophenone (Darocur 1173) as photoinitiator making up the reactive monomer mixture. The following is an illustrative preparation:

A monomer mixture containing 89.6% by weight of the GLUCAM 401B methacrylic anhydride adduct described in example 8, 10% TRIS and 0.4% Darocur 1173 is poured into an appropriately sized container and thoroughly mixed at room temperature until it becomes homogeneous. The mixture is then allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs, rinsed with deionized water and allowed to equilibrate in physiological saline.

## Examples 26-30

In these examples either the GLUCAM 201B or the GLUCAM 201C methacrylic anhydride adducts (examples 4 and 5, respectively) were employed as crosslinkers in conjunction with methacrylic acid and 2-hydroxy-2-methylpropiophenone (Darocur 1173) as photoinitiator making up the reactive monomer mixture. The following is an illustrative preparation:

A monomer mixture containing 98.6% by weight of the GLUCAM 201C methacrylic anhydride adduct described in example 5, 1% of methacrylic acid and 0.4% Darocur 1173 is placed into an appropriately sized container and thoroughly mixed at room temperature until it becomes homogeneous. The mixture is then allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the flame by swelling in isopropanol for 5 minutes. The lenses are then extracted with isopropanol for 24 hrs, rinsed with deionized water and allowed to equilibrate in physiological saline.

## Examples 31-34

In these examples the GLUCAM 201B methacrylic anhydride adduct (example 4) was employed as crosslinker in conjunction with 1H,1H,5H-perfluoropentyl methacrylate and 2-hydroxy-2-methylpropiophenone (Darocur 1173) as photoinitiator making up the reactive monomer mixture. The following is an illustrative preparation:

A formulation containing 84.6% by weight of the GLUCAM 201C methacrylic anhydride adduct described in Example 4, 15% of 1H,1H,5H-perfluoropentyl methacrylate and 0.4% Darocur 1173 is poured into an appropriately sized container. After thoroughly mixing the above formulation at room temperature, the mixture is allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs, rinsed with deionized water and allowed to equilibrate in physiological saline.

## Examples 35-39

In these examples the GLUCAM 201A methacrylic anhydride adduct (example 3) was employed as crosslinker in conjunction with 3-methacryloxypropyltris-(trimethylsiloxy)silane (TRIS) and 2-hydroxy-2-methylpropiophenone (Darocur 1173) as photoinitiator making up the reactive monomer mixture. The following is an illustrative preparation:

A monomer mixture containing 84.6% by weight of the GLUCAM 201A methacrylic anhydride adduct described in Example 3, 15% TRIS and 0.4% Darocur 1173 is placed into an appropriately sized container and thoroughly mixed at room temperature until it becomes homogeneous. The mixture is allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs, rinsed with deionized water and allowed to equilibrate in physiological saline.

## Examples 40-44

In these examples the GLUCAM 201B methacrylic anhydride adduct (example 4) was employed as crosslinker in conjunction with 3-methacryloxypropyltris-(trimethylsiloxy)silane (TRIS) and 2-hydroxy-2-methylpropiophenone (Darocur 1173) as photoinitiator making up the reactive monomer mixture. The following is an illustrative preparation:

A monomer mixture containing 49.6% by weight of the GLUCAM 201B methacrylic anhydride adduct described in Example 4, 50% TRIS and 0.4% Darocur 1173 is poured into an appropriately sized container. After thoroughly mixing the above formulation at room temperature, the mixture is allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs rinsed with deionized water and allowed to equilibrate in physiological saline.

## Examples 45-49

In these examples the GLUCAM 201B methacrylic anhydride adduct (example 4) was employed as crosslinker in conjunction with 3-methacryloxypropyltris-(trimethylsiloxy)silane (TRIS) and 2-hydroxy-2-methylpropiophenone (Darocur 1173) as photoinitiator making up the reactive monomer mixture. The following is an illustrative preparation:

A monomer blend containing 79.6% by weight of the GLUCAM 201B methacrylic anhydride adduct described in Example 4, 20% TRIS and 0.4% Darocur 1173 is weighed into an appropriately sized container. After thoroughly mixing the above formulation at room temperature, the mixture is allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs, rinsed with deionized water and allowed to equilibrate in physiological saline.

## Examples 50-52

In these examples the GLUCAM 201C methacrylic anhydride adduct (example 5) was employed as crosslinker in conjunction with 3-methacryloxypropyltris-(trimethylsiloxy)silane (TRIS), N,N-dimethylacrylamide (DMA) and 2-hydroxy-2-methylpropiophenone (Darocur 1173) as photoinitiator making up the reactive monomer mixture. The following is an illustrative preparation:

A formulation containing 49.6% by weight of the GLUCAM 201C methacrylic anhydride adduct described in Example 5, 10% of DMA, 40% of TRIS and 0.4% Darocur 1173 is poured into an appropriately sized container. After thoroughly mixing the above mixture at room temperature, the mixture is allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the flame by swelling in isopropanol for 5 minutes. The lenses are then extracted with isopropanol for 24 hrs, rinsed with deionized water and allowed to equilibrate in physiological saline.

## Examples 53-57

In these examples the GLUCAM 201C methacrylic anhydride adduct (example 5) was employed as crosslinker in conjunction with 3-methacryloxypropyltris-(trimethylsiloxy)silane (TRIS), N,N-dimethylacrylamide (DMA) and 2-hydroxy-2-methylpropiophenone (Darocur 1173) as photoinitiator making up the reactive monomer mixture. A diluent, either 1-hexanol or N-methyl pyrrolidone, was used to help compatibilize the various components. The following is an illustrative preparation: A total of 38.7 parts by weight of the GLUCAM 201C methacrylic anhydride adduct described in Example 5, 10 parts of DMA, 48.7 parts of TRIS, 1 part Darocur 1173 and 1.6 parts of 1-hexanol is weighed into an appropriately sized container. After thoroughly mixing the above formulation at room temperature, the mixture is allowed to stir under reduced pressure (40 mmHg) for 30 min and subsequently transferred to contact lens molds. The

filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs, rinsed with deionized water and allowed to equilibrate in physiological saline.

## Examples 58-60

In these examples either the GLUCAM 201A, GLUCAM 201B or the GLUCAM 201C methacrylic anhydride adducts (examples 3, 4 and 5, respectively) were employed as crosslinkers in conjunction with 2-hydroxy-2-methylpropiophenone (Darocur 1173) as photoinitiator making up the reactive monomer mixture. The following is an illustrative preparation:

A formulation containing 99.6% by weight of the GLUCAM 201C methacrylic anhydride adduct described in example 5 and 0.4% of Darocur 1173 is placed into an appropriately sized container and thoroughly mixed at room temperature until it becomes clear. The mixture is then allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs, rinsed with deionized water and allowed to equilibrate in physiological saline.

## Examples 61-66

In these examples the GLUCAM 201C methacrylic anhydride adduct (example 5) was employed as crosslinker in conjunction with 3-methacryloxypropyltris-(trimethylsiloxy)silane (TRIS), N,N-dimethylacrylamide (DMA) or monomethoxy polethylene glycol 350 methacrylate (mPEG350 MA) and 2-hydroxy-2-methylpropiophenone (Darocur 1173) as photoinitiator making up the reactive monomer mixture. A diluent, either 1-hexanol or N-methyl pyrrolidone, was used to help compatibilize the various components. The following is an illustrative preparation:

A total of 40 parts by weight of the GLUCAM 201C methacrylic anhydride adduct described in example 5, 15 parts of mPEG350 MA, 40 parts of TRIS, 1 part Darocur 1173 and 5 parts of 1-hexanol is weighed into an appropriately sized container and thoroughly mixed at room temperature until it is homogeneous. The mixture is then allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs, rinsed with deionized water and allowed to equilibrate in physiological saline.

## Examples 67-72

In these examples either the GLUCAM 201A, GLUCAM 201B or the GLUCAM 201C methacrylic anhydride adducts (examples 3, 4 and 5, respectively) were employed as crosslinkers in conjunction with TRIS, either N,N-dimethylacrylamide (DMA) or monomethoxy polethylene glycol 350 methacrylate (mPEG350 MA), and 2-hydroxy-2-methylpropiophenone (Darocur 1173) as photoinitiator making up the reactive monomer mixture. Diluent, whenever used, was 1-hexanol. The following is an illustrative preparation:

A monomer mixture containing 20% by weight of the GLUCAM 201C methacrylic anhydride adduct described in example 5, 29% DMA, 50% TRIS and 0.4% of Darocur 1173 is poured into an appropriately sized container. After thoroughly mixing the above formulation at room temperature, the mixture is allowed to stir under reduced pressure (40 mmHg) for 30 min and subsequently transferred to contact lens molds. The filled molds are exposed to UV light (wavelength 300-380 nm, Dose=3-4 Joules/cm2) for 30 minutes at room temperature. The molds are then heated to 75°C for 2-3 minutes and separated. The formed lens is released from the frame by swelling in isopropanol for 5 minutes. The lenses are then extracted with isopropanol for 24 hrs, rinsed with deionized water and allowed to equilibrate in physiological saline.

Tables 1 and 2 list the alkoxylated methyl glucosides, and the capped prepolymers, and their respective properties reacted to from the polymers of Examples 1 to 10. Tables 3-15 list the materials combined to form the hydrogels of Examples 11-72.

Table 1

| Example Number | 1 | 2 | 3 | 4 | 5 |
|---|---|---|---|---|---|
| Alkoxylated Methyl Glucoside | | | | | |
| Polyol | Glucam PEP | Glucam PEP | Glucam 201A | Glucam 201B | Glucam 201C |
| EO Content (wt%) | 22.9 | 22.9 | 4.9 | 14.8 | 29.4 |
| PO Content (wt%) | 75.3 | 75.3 | 93.4 | 83.5 | 68.8 |
| Alkoxylation No. | 199 | 199 | 200 | 200 | 200 |
| Hydroxyl Value | 33.4 ± 0.3 | 33.4 ± 0.3 | 27.4 ± 0.2 | 34.8 ± 1.5 | 29.0 ± 0.5 |
| Mn (Hydroxyl Value) | 6724 | 6724 | 8180 | 6451 | 7720 |
| GPC* | | | | | |
| Mn | 8070 (1600) | 8070 (1600) | 10,800 (5670) | 11,700 (5720) | 10,300 (5050) |
| Mw | 8580 (1670) | 8580 (1670) | 11,100 (5860) | 11,900 (5950) | 10,500 (5250) |
| Polydispersity | 1.06 (1.05) | 1.06 (1.05) | 1.03 (1.03) | 1.02 (1.04) | 1.03 (1.04) |
| Viscosity @ 25C (cps) | 5080 | 5080 | 1330 | 1079 | 3530 |
| Capped Prepolymer | | | | | |
| Capping Agent | IEM | MAAnh | MAAnh | MAAnh | MAAnh |
| Residual MAA | - | | 0.0058 | <0.001 | 0.0014 |
| Residual MAAnh | - | | <0.001 | <0.001 | <0.0008 |
| %OH Reacted | | | >100 | >100 | 98.7 |
| Viscosity @ 25C (cps) | | | 844 | 626 | |

*Number in parentheses corresponds to a second distribution, consisting of <10% of the total material.

Table 2

| Example Number | 6 | 7 | 8 | 9 | 10 |
|---|---|---|---|---|---|
| Alkoxylated Methyl Glucoside | | | | | |
| Polyol | Glucam 301B | Glucam 401B | Glucam 202B | Glucam 302B | Glucam 402B |
| EO Content (wt%) | 14.9 | 14.8 | 14.8 | 14.9 | 14.8 |
| PO Content (wt%) | 83.9 | 84.3 | 83.5 | 83.9 | 84.3 |
| Alkoxylation No. | 300 | 400 | 200 | 300 | 400 |
| Hydroxyl Value | 27.8 ± 0.1 | 28.6 ± 0.2 | 30.9 ± 0.1 | 31.6 ± 0.2 | 27.4 ± 0.1 |
| Mn (Hydroxyl Value) | 8069 | 7848 | 7257 | 7109 | 8194 |
| GPC* | | | | | |
| Mn | 10,100 (5030) | 10,500 (5350) | 7330 (3420) | 8920 (4580) | 12,800 (6210) |
| Mw | 10,400 (5140) | 10,800 (5420) | 7530 (3540) | 9160 (4660) | 13,200 (6350) |
| Polydispersity | 1.03 (1.02) | 1.03 (1.01) | 1.03 (1.04) | 1.03 (1.02) | 1.03 (1.03) |
| Viscosity @ 25C (cps) | 1872 | 1334 | 1259 | 1348 | 1855 |
| Capped Prepolymer | | | | | |
| Capping Agent | MAAnh | MAAnh | MAAnh | MAAnh | MAAnh |
| Residual MAA | | | | | |
| Residual MAAnh | | | | | |
| %OH Reacted | | | | | |
| Viscosity @ 25C (cps) | | | | | |

*Number in parentheses corresponds to a second distribution, consisting of <10% of the total material.

Table 3

| | Example 11 | Example 12 | Example 13 | Example 14 | Example 15 |
|---|---|---|---|---|---|
| Composition (%) | | | | | |
| GLU PEP/IEM | 99.6 | 94.5 | 89.6 | 84.6 | 79.7 |
| TRIS | 0 | 5 | 10 | 15 | 19.9 |
| Darocur 1173 | 0.4 | 0.4 | 0.4 | 0.4 | 0.4 |
| Properties: | | | | | |
| Water Content (%) | 15.3 | 14.3 | 12.3 | 12.3 | 11.6 |
| Dk (Barrer) | 25.3 | 29.1 | 33.4 | 41.7 | 42.1 |
| Modulus (psi) | 368 | 355 | 320 | 308 | 305 |
| % Elongation | 97 | 111 | 99 | 111 | 128 |
| Tens. Strength (psi) | 193 | 206 | 165 | 169 | 192 |
| Hydrogel | Clear | Clear | Clear | Clear | Clear |

Table 4

| | Example 16 | Example 17 | Example 18 | Example 19 | Example 20 | Example 21 |
|---|---|---|---|---|---|---|
| Composition (%) | | | | | | |
| GLU PEP/MAAnh | 99.6 | 89.6 | 79.4 | -- | -- | -- |
| GLU 202B/MAAnh | -- | -- | -- | 99.6 | 89.6 | 79.4 |
| TRIS | 0 | 10 | 20 | 0 | 10 | 20 |
| Darocur 1173 | 0.4 | 0.4 | 0.4 | 0.4 | 0.4 | 0.4 |
| Properties: | | | | | | |
| Water Content (%) | 19 | 14.6 | 12 | 3.7 | 2.7 | 1.7 |
| Dk (Barrer) | 26 | -- | 47.4 | 44.1 | 46.7 | 67.4 |
| Modulus (psi) | 346 | -- | 296 | 422 | 368 | 320 |
| % Elongation | 115 | -- | 165 | 162 | 126 | 110 |
| Tens. Strength (psi) | 207 | -- | 245 | 343 | 229 | 167 |
| Hydrogel | Clear | Clear | Clear | Clear | Clear | Clear |

Table 5

| | Example 22 | Example 23 | Example 24 | Example 25 |
|---|---|---|---|---|
| Composition (%) | | | | |
| GLU 201B/MAAnh | 99.6 | 89.6 | -- | -- |
| GLU 401B/MAAnh | -- | -- | 99.6 | 89.6 |
| TRIS | 0 | 10 | 0 | 10 |
| Darocur 1173 | 0.4 | 0.4 | 0.4 | 0.4 |
| Properties: | | | | |
| Water Content (%) | 4.4 | 2.3 | 4.6 | 3.2 |
| Dk (Barrer) | 45.7 | 54.4 | 45.4 | 58.4 |
| Modulus (psi) | 426 | 372 | 332 | 288 |
| % Elongation | 164 | 151 | 147 | 132 |
| Tens. Strength (psi) | 350 | 277 | 244 | 184 |
| Hydrogel | Clear | Clear | Clear | Clear |

Table 6

| | Example 26 | Example 27 | Example 28 | Example 29 | Example 30 |
|---|---|---|---|---|---|
| Composition (%) | | | | | |
| GLU 201B/MAAnh | 98.6 | 96.6 | 94.6 | 92.6 | -- |
| GLU 201C/MAAnh | -- | -- | -- | -- | 98.6 |
| Methacrylic acid | 1 | 3 | 5 | 7 | 1 |
| Darocur 1173 | 0.4 | 0.4 | 0.4 | 0.4 | 0.4 |
| Properties: | | | | | |
| Water Content (%) | 4.5 | 6.3 | 7.6 | 8.2 | 20.4 |
| Dk (Barrer) | 33.3 | 31.8 | 27.7 | 23 | 29.2 |
| Modulus (psi) | 662 | 628 | 605 | 651 | 660 |
| % Elongation | 55 | 77 | 64 | 63 | 108 |
| Tens. Strength (psi) | -- | -- | -- | -- | -- |
| Hydrogel | Clear | Clear | Clear | Clear | Clear |

Table 7

| | Example 31 | Example 32 | Example 33 | Example 34 |
|---|---|---|---|---|
| Composition (%) | | | | |
| GLU 201B/MAAnh | 94.5 | 89.6 | 84.6 | 79.7 |
| Fluoromonomer* | 5 | 10 | 15 | 20 |
| Darocur 1173 | 0.4 | 0.4 | 0.4 | 0.4 |
| Properties: | | | | |
| Water Content (%) | 3.6 | 3.3 | 3.8 | 2.7 |
| Dk (Barrer) | 40.9 | 40.1 | 38.5 | 34.6 |
| Modulus (psi) | 655 | 622 | 586 | 546 |
| % Elongation | 83 | 105 | 69 | 75 |
| Tens. Strength (psi) | -- | -- | -- | -- |
| Hydrogel | Clear | Clear | Clear | Clear |

* Fluoromonomer: 1H,1H,5H-Octafluoropentyl Methacrylate

Table 8

| | Example 35 | Example 36 | Example 37 | Example 38 | Example 39 |
|---|---|---|---|---|---|
| Composition (%) | | | | | |
| GLU 201A/MAAnh | 94.6 | 89.6 | 84.6 | 79.6 | 69.6 |
| TRIS | 5 | 10 | 15 | 20 | 30 |
| Darocur 1173 | 0.4 | 0.4 | 0.4 | 0.4 | 0.4 |
| Properties: | | | | | |
| Water Content (%) | 3.4 | 2.8 | 2.6 | 2.7 | 2.6 |
| Dk (Barrer) | 40.7 | 46.2 | 48.3 | 54.9 | 69.4 |
| Modulus (psi) | 656 | 624 | 570 | 538 | 475 |
| % Elongation | 54 | 75 | 87 | 73 | 73 |
| Tens. Strength (psi) | -- | -- | -- | -- | -- |
| Hydrogel | Clear | Clear | Clear | Clear | Clear |

Table 9

| | Example 40 | Example 41 | Example 42 | Example 43 | Example 44 |
|---|---|---|---|---|---|
| Composition (%) | | | | | |
| GLU 201B/MAAnh | 59.6 | 49.6 | 39.6 | 29.6 | 19.6 |
| TRIS | 40 | 50 | 60 | 70 | 80 |
| Darocur 1173 | 0.4 | 0.4 | 0.4 | 0.4 | 0.4 |
| Properties: | | | | | |
| Water Content (%) | 1.9 | 3.4 | 2 | 5.2 | 2 |
| Dk (Barrer) | -- | -- | -- | -- | -- |
| Modulus (psi) | 390 | 295 | 216 | 178 | 170 |
| % Elongation | 104 | 105 | 154 | 189 | 276 |
| Tens. Strength (psi) | | -- | -- | -- | -- |
| Hydrogel | Clear | Clear | Clear | Slight Haze | Slight Haze |

Table 10

| | Example 45 | Example 46 | Example 47 | Example 48 | Example 49 |
|---|---|---|---|---|---|
| Composition (%) | | | | | |
| GLU 201B/MAAnh | 94.6 | 89.6 | 84.6 | 79.6 | 69.6 |
| TRIS | 5 | 10 | 15 | 20 | 30 |
| Darocur 1173 | 0.4 | 0.4 | 0.4 | 0.4 | 0.4 |
| Properties: | | | | | |
| Water Content (%) | 4.9 | 3.8 | 4.2 | 4.3 | 3.2 |
| Dk (Barrer) | 45.7 | 51.1 | 59.5 | 60.1 | 73.5 |
| Modulus (psi) | 523 | 486 | 446 | 432 | 368 |
| % Elongation | 52 | 53 | 59 | 57 | 53 |
| Tens. Strength (psi) | -- | -- | -- | -- | -- |
| Hydrogel | Clear | Clear | Clear | Clear | Clear |

Table 11

| | Example 50 | Example 51 | Example 52 |
|---|---|---|---|
| Composition (%) | | | |
| GLU 201C/MAAnh | 49.6 | 49.6 | 29.6 |
| DMA | 10 | 25 | 20 |
| TRIS | 40 | 25 | 50 |
| Darocur 1173 | 0.4 | 0.4 | 0.4 |
| Properties: | | | |
| Water Content (%) | 15.4 | 31 | 19.6 |
| Dk (Barrer) | 57.2 | 36.9 | 71.8 |
| Modulus (psi) | 288 | 299 | 224 |
| % Elongation | 121 | 113 | 269 |
| Tens. Strength (psi) | -- | -- | -- |
| Hydrogel | Clear | Clear | Clear |

Table 12

| | Example 53 | Example 54 | Example 55 | Example 56 | Example 57 |
|---|---|---|---|---|---|
| Composition (%) | | | | | |
| GLU 201C/MAAnh | 28 | 40 | 28.9 | 38.7 | 36 |
| TRIS | 42 | 30 | 56.8 | 48.7 | 45 |
| DMA | 30 | 30 | 10 | 10 | 9 |
| Darocur 1173 | 1 | 1 | 1 | 1 | 1 |
| 1-Hexanol | -- | -- | 3.3 | 1.6 | -- |
| N-Methyl Pyrrolidone | -- | -- | -- | -- | 9 |
| Properties: | | | | | |
| Water Content (%) | 30.1 | 33.9 | 12.4 | 15.7 | 17.7 |
| Dk (Barrer) | 49.8 | 40.3 | 97.1 | 72.5 | -- |
| Modulus (psi) | 155 | 209 | 185 | 225 | 217 |
| % Elongation | 216 | 109 | 332 | 226 | 214 |
| Tens. Strength (psi) | -- | -- | -- | -- | -- |
| Hydrogel | Clear | Clear | Clear | Clear | Clear |

Table 13

| | Example 58 | Example 59 | Example 60 |
|---|---|---|---|
| Composition (%) | | | |
| GLU 201A/MAAnh | 99.6 | -- | -- |
| GLU 201B/MAAnh | -- | 99.6 | -- |
| GLU 201C/MAAnh | -- | -- | -- |
| Darocur 1173 | 0.4 | 0.4 | 0.4 |
| Properties: | | | |
| Water Content (%) | 3.5 | 6.4 | 18.2 |
| Dk (Barrer) | 48.8 | 37.3 | 32.3 |
| Modulus (psi) | 578 | 620 | 732 |
| % Elongation | 68 | 48 | 89 |
| Tens. Strength (psi) | -- | -- | -- |
| Hydrogel | Clear | Clear | Clear |

Table 14

| | Example 61 | Example 62 | Example 63 | Example 64 | Example 65 | Example 66 |
|---|---|---|---|---|---|---|
| Composition (parts) | | | | | | |
| GLU 201C/MAAnh | 24 | 20 | 20 | 40 | 20 | 40 |
| DMA | 24 | 20 | 30 | 15 | 10 | 0 |
| mPEG350 MA | 0 | 0 | 0 | 0 | 0 | 15 |
| TRIS | 45 | 55 | 40 | 40 | 65 | 40 |
| 1-Hexanol | 7 | 5 | 10 | 5 | 5 | 5 |
| Darocur 1173 | 1 | 1 | 1 | 1 | 1 | 1 |
| Properties: | | | | | | |
| Water Content (%) | 24.5 | 18.6 | 33.7 | 21.3 | 8.1 | 20.4 |
| Dk (Barrer) | 58.4 | 80.5 | -- | 58.5 | -- | 76.6 |
| Modulus (psi) | 136 | 133 | 116 | 203 | 185 | 187 |
| % Elongation | 255 | 326 | 239 | 152 | 482 | 120 |
| Tens. Strength (psi) | -- | -- | -- | -- | -- | -- |
| Hydrogel | Clear | Clear | Slight Haze | Clear | Clear | Clear |

Table 15

| | Example 67 | Example 68 | Example 69 | Example 70 | Example 71 | Example 72 |
|---|---|---|---|---|---|---|
| Composition (%) | | | | | | |
| GLU 201A/MAAnh | 19 | 20 | 0 | 0 | 0 | 0 |
| GLU 201B/MAAnh | 0 | 0 | 19.8 | 20 | 0 | 0 |
| GLU 201C/MAAnh | 0 | 0 | 0 | 0 | 19.3 | 20 |
| DMA | 0 | 29 | 0 | 29 | 0 | 29 |
| mPEG350 MA | 28 | 0 | 28.2 | 0 | 28.8 | 0 |
| TRIS | 48 | 50 | 48 | 50 | 47.4 | 50 |
| 1-Hexanol | 4 | 0 | 3 | 0 | 3.5 | 0 |
| Darocur 1173 | 1 | 1 | 1 | 1 | 1 | 1 |
| Properties: | | | | | | |
| Water Content (%) | 26.4 | 23.5 | 26.1 | 20.9 | 33.5 | 26.2 |
| Dk (Barrer) | 88.3 | 67.9 | 81.4 | 65.5 | 81.6 | 64.6 |
| Modulus (psi) | 59 | 102 | 88 | 120 | 71 | 154 |
| % Elongation | 144 | 301 | 104 | 240 | 164 | 289 |
| Tens. Strength (psi) | -- | -- | -- | -- | -- | -- |
| Hydrogel | Clear | Clear | Clear | Clear | Clear | Clear |

## Claims

1. A cross-linked polymer comprising the reaction product of a hydrophilic monomer in an amount of at least 50% by weight of the crosslinked polymer and a cross-linking amount of a polyfunctional compound having the following formula:

$$[S(A)_n]_y$$

where S denotes the residue of a five or six membered saccharide ring;
y is between 1 and 20, inclusive;
n is the number of arms coming off S;
$R_1$ is a group attached to the ring anomeric carbon selected from the group consisting of:

(a) $-CH_3$

(b) $-CH_2CH_3$

(c) various straight chain and branched alkyl groups up to an including 20 carbon atoms

(d) aromatic rings, including benzene, phenyl, p-tolyl, and naphthyl groups

(e) acetates and other carboxylic acid esters

(f) fluorinated alkyl groups

and A is a straight chain polyether generated by polymerizing ethylene or propylene oxide right off the ring directly without the use of diisocyanates.

2. The polymer of claim 1, where A is a random, linear copolymer of ethylene oxide and propylene oxide with a terminally unsaturated group capable of undergoing free-radical polymerization in the presence of a thermally activated or photo-activated initiator, such that

$$A = -[OCH_2CHR_2]_a-[OCH_2CHR_3]_b-X-V$$

where $R_2$ and $R_3$ can either both be H, both be $-CH_3$, or H and $CH_3$ with a and b such as to construct a random copolymer of ethylene oxide and propylene oxide, where (a + b) is from 1 to 500, inclusive, and X is a linking group which is selected from the group consisting of:

-O- -NH- 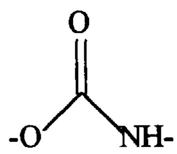 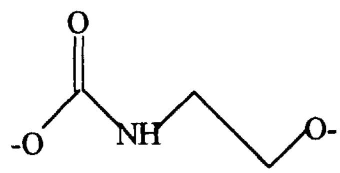

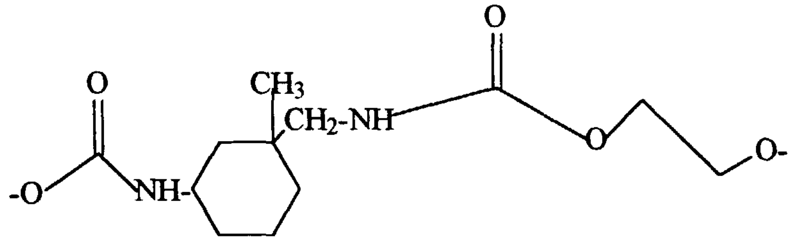

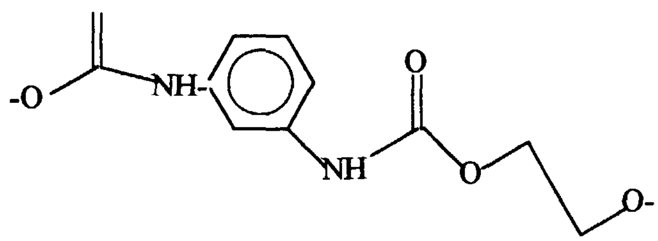

and V is an unsaturated group capable of free-radical reaction selected from the group consisting of:

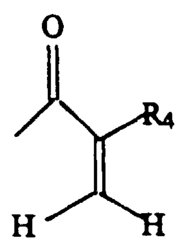

where $R_4$ = H or Me

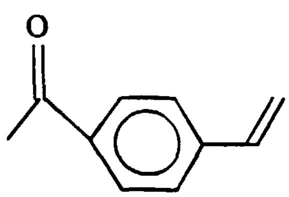 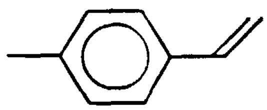 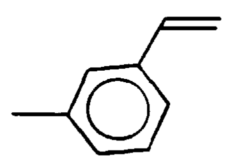 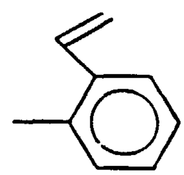

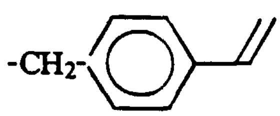 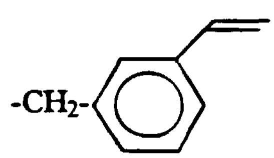

3. The polymer of claim 1, where A is a homopolymer of ethylene or propylene oxide where
A = $-[OCH_2CHR_5]_c-X-V$, where $R_5$ is either H or $CH_3$, X is a linking group which is selected from the group consisting of:

-O- -NH-

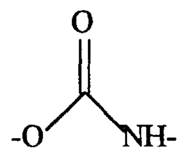

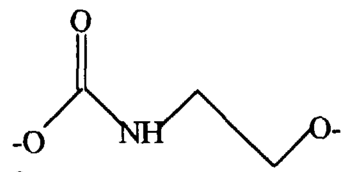

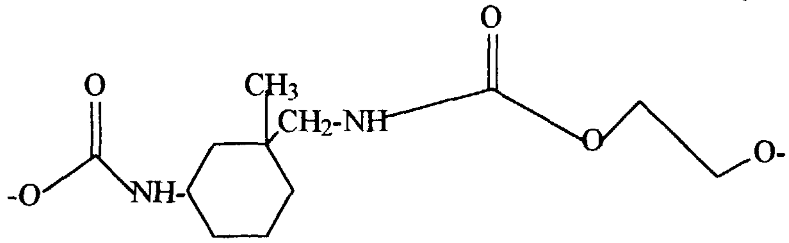

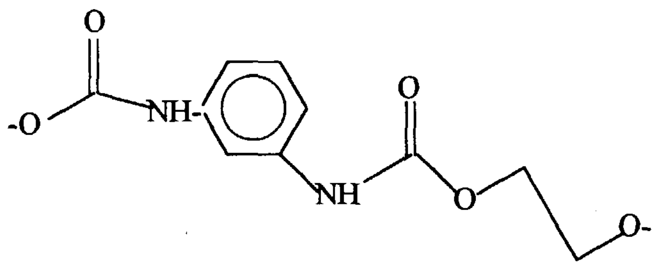

and V is an unsaturated group capable of free-radical reaction selected from the group consisting of:

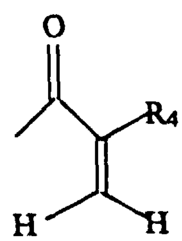

where $R_4$ = H or Me

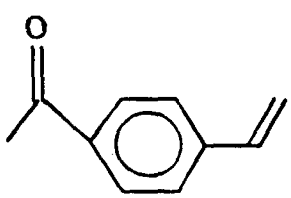

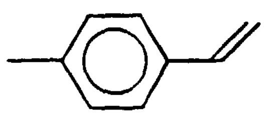

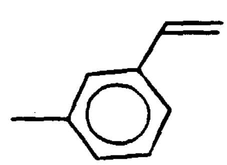

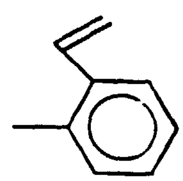

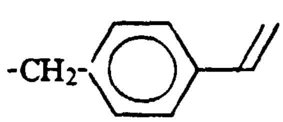

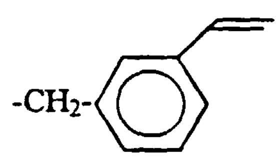

and c is from about 1 to 500, inclusive.

4. The polymer of claim 1, where A is a block copolymer of ethylene and propylene oxide where
A = $-[OCH_2CHR_6]_d-[OCH_2CHR_7]_e-[OCH_2CHR_8]_f-X-V$, where $R_6$, $R_7$ and $R_8$ are combinations of H or $CH_3$, and d, e and f are such that ( d + e + f ) varies anywhere from 2 to 500, X is a linking group which is selected from the group consisting of:

-O- -NH- 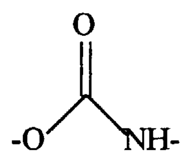 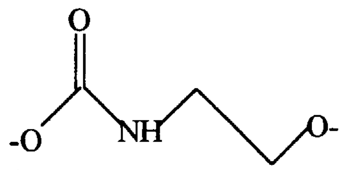

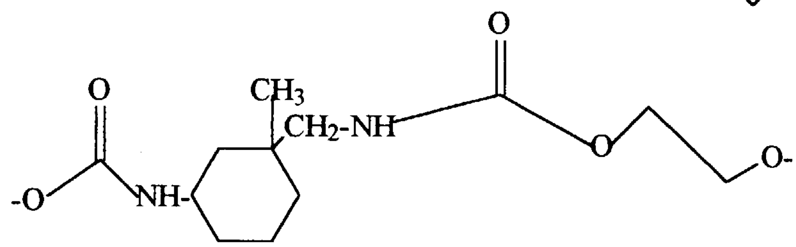

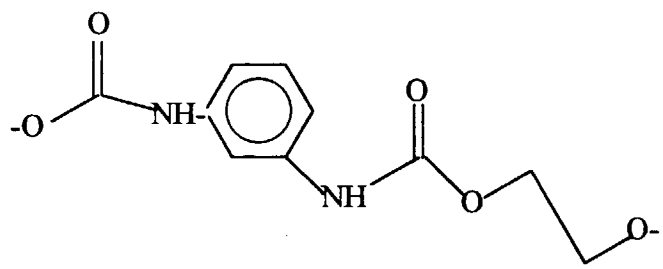

and V is the unsaturated group capable of free-radical reaction selected from the group consisting of:

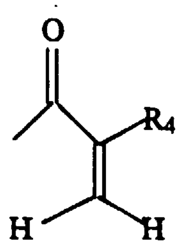

where $R_4$ = H or Me